# EUROPEAN PATENT SPECIFICATION

(11) **EP 4 564 485 B1**
(45) Date of publication and mention of the grant of the patent: **11.11.2026**
(21) Application number: 24212592.0
(22) Date of filing: 13.11.2024
(51) Int. Cl.: H01M 10/0565, H01M 4/62, H01M 10/0525, H01M 10/0562, H01M 10/052

(54) **SOLID ELECTROLYTE MEMBRANE, METHOD OF MANUFACTURING THE SAME, AND ALL-SOLID-STATE SECONDARY BATTERY INCLUDING THE SAME**
FESTELEKTROLYTMEMBRAN, VERFAHREN ZUR HERSTELLUNG DAVON UND FESTKÖRPERSEKUNDÄRBATTERIE DAMIT
MEMBRANE ÉLECTROLYTIQUE SOLIDE, SON PROCÉDÉ DE FABRICATION ET BATTERIE SECONDAIRE ENTIÈREMENT SOLIDE LA COMPRENANT

(30) Priority: 16.11.2023 KR 20230159285; 08.11.2024 KR 20240157909
(43) Date of publication of application: 04.06.2025
(73) Proprietor: SAMSUNG SDI CO., LTD., Yongin-si, Gyeonggi-do 17084 (KR); Korea Kumho Petrochemical Co., Ltd., Seoul 04542 (KR)
(72) Inventor: Kim, Mokwon, 16678 Suwon-si (KR); Kang, Dongil, 16678 Suwon-si (KR); Ku, Junhwan, 16678 Suwon-si (KR); Kim, Jaeyun, 04542 Jung-gu (KR); Ryu, Wonyeong, 04542 Jung-gu (KR); Park, June, 04542 Jung-gu (KR); Lee, Yonggun, 16678 Suwon-si (KR); Lee, Hanbaek, 04542 Jung-gu (KR); Choi, Bona, 04542 Jung-gu (KR); Hwang, Seungsik, 16678 Suwon-si (KR)
(74) Representative: Elkington and Fife LLP

(56) References cited:
- CN-A- 112 803 064
- US-A1- 2022 344 706
- US-B1- 7 097 941

## Description

### FIELD OF THE INVENTION

The disclosure relates to a solid electrolyte membrane, a method of manufacturing the same, and an all-solid-state secondary battery including the same.

### BACKGROUND OF THE INVENTION

A solid electrolyte membrane may be obtained by applying, onto a substrate, a composition for forming a solid electrolyte membrane, including a solid electrolyte, a solvent, and a binder, and then drying the resulting substrate. In manufacturing a solid electrolyte membrane, when a process for large-area and mass production, such as roll pressing, is applied, the solid electrolyte membrane is subjected to pressing and drying processes to reduce pores and increase the density of the membrane. During these processes, the brittleness of a solid electrolyte can rapidly increase, resulting in microcracks or fractures. This directly affects a battery cell assembly process, which continues as a subsequent process, and thus, there is a continuing need to improve the physical properties of the solid electrolyte membrane after the pressing process.

The following prior art is considered relevant for understanding the present invention:
CN112803064A discloses a sulfide-based composite solid-electrolyte membrane in which 80-97 wt % of a sulfide solid electrolyte is mixed with 3-20 wt % of a low-glass-transition-temperature polymer (Mw 4,000-30,000 g mol⁻¹, Tg -70 °C to -50 °C) that acts as a flexible binder, enabling thin, high-conductivity (≥10⁻⁴ S cm⁻¹) membranes suitable for high-loading all-solid-state batteries.

US7097941B1 claims a solid-electrolyte secondary battery whose solid electrolyte contains a fluorocarbon polymer matrix with a weight-average molecular weight of >550,000 g mol⁻¹ (often combined with a 300,000-550,000 g mol⁻¹ polymer to lower viscosity), providing excellent adhesion to electrode active-material layers and improved cycle life.

### SUMMARY OF THE INVENTION

The invention is defined in the appended claims.

Provided are a solid electrolyte membrane with improved flexibility and a method of manufacturing the same.

Provided is an all-solid-state secondary battery having improved stability by including the above-described solid electrolyte membrane.

Additional aspects will be set forth in part in the description which follows and, in part, will be apparent from the description, or may be learned by practice of the presented embodiments of the disclosure.

According to an aspect of the disclosure, a solid electrolyte membrane includes a solid electrolyte, a high-molecular-weight polymer binder having a weight average molecular weight of about greater than 75,000 gram/mole (g/mol) but less than or equal to 1,000,000 g/mol, and a low-molecular-weight non-polar liquid rubber (non-polar elastomer), wherein liquid rubber refers to a rubber that is liquid at 25 °C; and a solvent; wherein the low-molecular-weight non-polar liquid rubber has a weight average molecular weight of about 2,000 g/mol to about 75,000 g/mol, and a viscosity of about 0.001 to 100 Pa.s (1 centipoises (cps) to 100,000 cps).

The solid electrolyte may include a sulfide-based solid electrolyte (also referred to as "a sulfide solid electrolyte"), an oxide-based solid electrolyte (also referred to as "an oxide solid electrolyte"), a polymer solid electrolyte, a gel electrolyte, or a combination thereof, and the gel electrolyte may include a polymer gel electrolyte. The sulfide-based solid electrolyte may be at least one selected from Li₂S-P₂S₅, Li₂S-P₂S₅-LiX where X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ where m and n are positive numbers and Z is Ge, Zn, or Ga, Li₂S-GeS₂, Li₂S-SiS₂-Li₃PO₄, Li₂S-SiS₂-LiₚMO_{q} where p and q are positive numbers and M is one of P, Si, Ge, B, Al, Ga, and In, Li₇₋ₓPS₆₋ₓClₓ (where 0≤x≤2), Li₇₋ₓPS₆₋ₓBrₓ(where 0≤x≤2), and Li₇₋ₓPS₆₋ₓIₓ (where 0≤x≤2).

The solid electrolyte membrane may have an ionic conductivity of about 0.1 milliSiemen per centimeter (mS/cm) to about 5 mS/cm at 25 °C.

According to another aspect of the disclosure, an all-solid-state secondary battery includes a cathode, an anode current collector, and a solid electrolyte layer disposed between the cathode and the anode current collector, wherein the solid electrolyte layer comprises the above-described solid electrolyte membrane.

According to another aspect of the disclosure, an all-solid-state secondary battery includes a cathode, an anode current collector, and a solid electrolyte layer disposed between the cathode and the anode current collector, wherein the solid electrolyte layer includes a first solid electrolyte layer and a second solid electrolyte layer, the first solid electrolyte layer is in contact with the cathode, the second solid electrolyte layer is in contact with an anode, and at least one of the first solid electrolyte layer or the second solid electrolyte layer includes the above-described solid electrolyte membrane.

An anode active material may include a carbon-based support and a metal-based anode active material supported on the carbon-based support, the metal-based anode active material may include a metal, a metal oxide, a composite of a metal and a metal oxide, or a combination thereof, the metal-based anode active material may have a particle form, the metal-based anode active material may have a particle diameter of about 1 nm to about 200 nm, the carbon-based support may have a particle form, and the carbon-based support may have a particle diameter of about 10 nm to about 2 µm. As used herein, "a carbon-based support" is also referred to as "a carbon support," and "a metal-based anode active material" is also referred to as "a metal anode active material."

According to another aspect of the disclosure, a method of manufacturing a solid electrolyte membrane, includes preparing a composition for forming a solid electrolyte membrane, the composition including a solid electrolyte, a high-molecular-weight polymer binder, low-molecular-weight non-polar liquid rubber, and a solvent, and coating a substrate with the composition to form a coated substrate, and drying the coated substrate to manufacture the solid electrolyte membrane on the substrate.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a graph of stress (Megapascal, MPa) versus strain (percent, %) illustrating stress changes according to strain from preload in solid electrolyte membranes of Example 3 and Comparative Example 3;
FIG. 2 is a graph of stress (Megapascal, MPa) versus strain (percent, %) illustrating stress changes according to strain in solid electrolyte membranes of Example 4, Example 5, and Comparative Example 3;

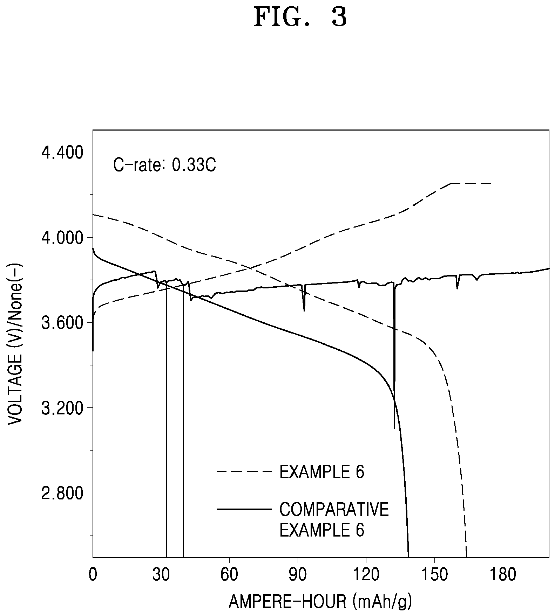

FIG. 3 is a graph of voltage (volt, V) versus specific capacity (milliampere-hour per gram, mAh/g) and illustrates the results of whether all-solid-state secondary batteries of Example 6 and Comparative Example 6 operate when charged at 0.33 C;
FIGS. 4A to 4C are schematic views illustrating an embodiment of a process of manufacturing an all-solid-state secondary battery including a first solid electrolyte membrane and a second solid electrolyte membrane;
FIG. 5 is a schematic view illustrating the structure of an embodiment of an all-solid-state secondary battery employing a solid electrolyte membrane; and
FIG. 6 is a schematic view illustrating the structure of another embodiment of an all-solid-state secondary battery employing a solid electrolyte membrane.

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10% or 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Hereinafter, embodiments will be described in detail. However, these embodiments are provided for illustrative purposes only and are not intended to limit the disclosure, and the disclosure is defined only by the scope of the following claims.

Unless otherwise specified herein, when a portion of a layer, a film, a region, a plate, or the like is referred to as being "on" another portion, it includes not only a case in which the portion is directly on the other portion, but also a case in which an intervening portion is present therebetween.

Unless otherwise specified herein, an expression in the singular may also include an expression in the plural. Unless otherwise specified, "A or B" may mean "including A, including B, or including A and B."

The term "combination thereof" as used herein may refer to a mixture, laminate, composite, copolymer, alloy, blend, reaction product and the like of constituents. The term "metal" as used herein refers to both metals and metalloids such as silicon and tellurium. Unless otherwise defined herein, the particle diameter may be an average particle diameter. Also, particle diameter refers to an average particle diameter (D50), which refers to the diameter of particles having a cumulative volume of 50 vol% in particle size distribution. The average particle diameter (D50) may be measured by using a method widely known in the art, and may be measured, for example, by using a particle size analyzer or from a transmission electron microscope image or a scanning electron microscope image. As another method, a dynamic light-scattering measurement device may be used to perform measurement and data analysis, the number of particles may be counted for each particle size range, and then the average particle diameter (D50) may be obtained through calculation therefrom. In some embodiments, the average particle diameter (D50) may be measured by using a laser diffraction method. If measurement is performed by a laser diffraction method, for example, particles to be measured may be dispersed in a dispersion medium, and then may be irradiated with ultrasonic waves of about 28 kHz at an output of 60 W by using a commercially available laser diffraction particle size measurement device (e.g., Microtrac MT 3000), and then the average particle diameter (D50) on the basis of 50% of the particle diameter distribution in the measurement device may be calculated.

The term "conjugated diene" as used herein refers to a hydrocarbon-based compound including a structure in which two carbon-carbon double bonds are linked to each other by a carbon-carbon single bond, and the term "conjugated polyene" as used herein refers to a hydrocarbon-based compound including at least three double bonds (e.g., at least three carbon-carbon double bonds) and at least two of the double bonds are conjugated, i.e., linked to each other by a carbon-carbon single bond.

"Non-polar" means no overall dipole.

The term "aromatic" as used herein refers to a hydrocarbon-based compound including a cyclic structure having a conjugated pi electron system, and the term "aliphatic" as used herein refers to a hydrocarbon-based compound excluding the above-described aromatic ring.

The term "including unit structures derived from monomers" as used herein means that (co)polymer is a polymer obtained using the monomers, and includes repeating units derived from the monomers. The amounts (wt%) of these unit structures may be measured by, for example, a method using nuclear magnetic resonance (NMR) such as ¹H-NMR.

The term "linear" as used herein refers to a form in which carbon atoms constituting a compound are arranged sequentially, and the term "branched" as used herein refers to a form in which at least one carbon in a compound is bound to at least three carbon atoms.

As used herein, the term "block" refers to a structure in which one unit structure dominates in a certain region of a polymer chain, the term "alternating" refers to a structure in which two or more unit structures are alternately bound in a certain region of a polymer chain, and the term "random" refers to a structure in which two or more unit structures are randomly bound in a certain region of a polymer chain. For example, "...A-A-A-A-..." may be a block structure, "...-A-B-A-B-..." may be an alternating structure, and "...-A-B-B-A-B-A-..." may be a random structure. In a polymer having unit structures consisting of A and B, the block structure may be represented by AB or A-B, and the random structure may be represented by A/B. These polymer structures may be confirmed by various known methods such as Fourier transform infrared spectroscopy (FT-IR), nuclear magnetic resonance spectroscopy (NMR), differential scanning calorimetry (DSC), and a Koldhof method. For example, the block structure may be confirmed by a Koldhof method, which involves staining a specific unit structure in a copolymer with osmic acid, and then observing the structure through transmission electron microscopy, or the like.

As used herein, a weight average molecular weight is determined by gel permeation chromatography (GPC) using a polystyrene standard.

Glass transition temperature is determined by differential scanning calorimetry (DSC) as per ASTM D3418 with a 20°C/min heating rate.

The viscosity values disclosed herein refer to the viscosity at room temperature (25°C).

In the present disclosure, a solid content means the total content of the remaining components excluding the solvent.

As used herein, viscosity was evaluated using a Brookfield viscometer. The Brookfield viscometer is a rotational viscometer that measures the torque value generated when a spindle is immersed in a sample and rotated at a constant speed. The measuring equipment used is a Brookfield Ametex DV Next rheometer, and the measuring conditions are 25°C, spindle 64, and 20 rpm.

Hereinafter, a solid electrolyte membrane according to an embodiment, a method of manufacturing the same, and an all-solid-state secondary battery including the same will be described in more detail with reference to the accompanying drawings.

When a process for large area and mass production (e.g., a roll press process) is applied in manufacturing a solid electrolyte membrane, the solid electrolyte membrane is subjected to a densification process that reduces pores and increases the density of the membrane through a pressing process, after coating and drying processes. In the densification process, the brittleness of the solid electrolyte membrane rapidly increases, resulting in the easy occurrence of microcracks or fractures of the solid electrolyte membrane. Microcracks or fractures in the solid electrolyte membrane directly affect a battery cell assembly process, and thus, it is difficult to perform a roll press process.

The disclosure provides a solid electrolyte membrane having improved flexibility by using a high-molecular-weight polymer binder and a low-molecular-weight non-polar liquid rubber as a plasticizer in a composition for forming a solid electrolyte membrane. Because the flexibility of the solid electrolyte membrane is improved, the solid electrolyte membrane is easily densified, and thus pressing process conditions are relaxed, and after the pressing process, the solid electrolyte membrane can have a high density, i.e., 90% or more, for example, 95 % or more, and improved bending strength and toughness. Here, for the density, it is based on the relative density, which is the ratio of the measured density value to the theoretical true density (bulk density) of the solid electrolyte membrane material. As a result, the occurrence of microcracks and fractures is suppressed even after the densification process, and thus, an all-solid-state secondary battery with improved cell structure stability may be provided.

The solid electrolyte membrane according to an embodiment may be a solid electrolyte membrane including: a solid electrolyte; a high-molecular-weight polymer binder; and a low-molecular-weight non-polar liquid rubber (non-polar elastomer), wherein the low-molecular-weight non-polar liquid rubber (non-polar elastomer) has a weight average molecular weight of about 2,000 g/mol to about 75,000 g/mol, for example about 2,000 g/mol to about 60,000 g/mol, and a viscosity of about 1 cps to about 100,000 cps, ( 0.001 to 100 Pa·s) or about 2,000 cps to about 100,000 cps. (2 to 100 Pa·s) The high-molecular-weight polymer binder having a weight average molecular weight of about greater than 75,000 g/mol but less than or equal to 1,000,000 g/mol,

The term "low-molecular-weight non-polar liquid rubber" as used herein refers to a non-polar elastomer and a material that is liquid at room temperature (25 °C) and has non-polar properties, and thus is not reactive to a solvent used when the solid electrolyte membrane is formed. The low-molecular-weight non-polar liquid rubber has a low weight average molecular weight, i.e., a weight average molecular weight of about 2,000 g/mol to about 75,000 g/mol and is non-polar, and thus has excellent solubility and dispersibility in the solid electrolyte and a solvent, e.g., a non-polar solvent, which are components of the composition for forming a solid electrolyte membrane. In addition, the low-molecular-weight non-polar liquid rubber not only has excellent compatibility with the high-molecular-weight polymer binder, but also does not evaporate or migrate. The term "migration" as used herein refers to a phenomenon in which a liquid plasticizer moves between solid electrolyte particles and is accumulated in a certain position or escapes to the outside of a solid electrolyte membrane, in a process of manufacturing the solid electrolyte membrane, for example, a pressing process.

The solid electrolyte may include a sulfide-based solid electrolyte, an oxide-based solid electrolyte, a polymer solid electrolyte, a gel electrolyte, or a combination thereof, and the gel electrolyte may include a polymer gel electrolyte.

The viscosity of the low-molecular-weight non-polar liquid rubber may be in a range of about 5 cps to about 100,000 cps, (0.005 - 100 Pa.s) about 50 cps to about 100,000 cps, (0.05 - 100 Pa.s) about 100 cps to about 100,000 cps, (0.1 - 100 Pa.s) about 500 cps to about 100,000 cps, about 1,000 cps to about 100,000 cps, about 5,000 cps to about 90,000 cps, (5 - 90 Pa.s) about 7,000 cps to about 85,000 cps, (7 - 85 Pa.s) about 10,000 cps to about 80,000 cps, (10 - 80 Pa.s) about 10,000 cps to about 70,000 cps, (10 - 70 Pa.s) or about 10,000 cps to about 50,000 cps. (10 - 50 Pa.s) When low-molecular-weight non-polar liquid rubber has a viscosity within the above range, the low-molecular-weight non-polar liquid rubber has superior characteristics capable of contributing to the plasticization of a composite electrolyte membrane by penetrating between the high-molecular-weight polymer binder and solid electrolyte particles, unlike low-molecular-weight solid rubber.

The amount of the low-molecular-weight non-polar liquid rubber may be 5 wt% or less, or in a range of about 0.1 weight percent (wt%) to about 5 wt%, about 0.2 wt% to about 5 wt%, about 1 wt% to about 5 wt%, or about 1 wt% to about 3 wt %, with respect to a total weight of the solid electrolyte membrane. When the amount of the low-molecular-weight non-polar liquid rubber is within the above ranges, a solid electrolyte membrane with improved stretchability may be manufactured.

The amount of the high-molecular-weight polymer binder may be 5 wt% or less, or in a range of about 0.1 wt% to about 5 wt%, about 0.2 wt% to about 5 wt%, about 1 wt% to about 5 wt%, or about 1 wt% to about 3 wt %, with respect to the total weight of the solid electrolyte membrane. When the amount of the high-molecular-weight polymer binder is within the above ranges, a solid electrolyte membrane with excellent adhesion to other substrates may be manufactured.

The amount of the solid electrolyte in the solid electrolyte membrane may be in a range of about 90 wt% to about 99 wt%, about 91 wt% to about 98 wt%, or about 92 wt% to about 97 wt%, with respect to the total weight of the solid electrolyte membrane. When the amount of the solid electrolyte is within the above ranges, an all-solid-state secondary battery with improved rate capabilities may be manufactured without reducing ionic conductivity.

The solid electrolyte membrane according to an embodiment may have high ductility and be easily densified while maintaining a density of 60 % or more after coating, and thus pressing process conditions may be relaxed. After pressing, the density of the solid electrolyte membrane may be maintained at 95 % or more, and thus, the solid electrolyte membrane may have improved bending strength and toughness while having high flexibility. Therefore, when the solid electrolyte membrane is used, manufacturing pressure may be reduced in cell assembly through a continuous process and this is suitable for forming a bonding interface between electrodes. As a result, all-solid-state secondary batteries with improved cell structure stability may be easily mass-produced.

The low-molecular-weight non-polar liquid rubber can be a low-molecular-weight rubber having a weight average molecular weight (Mw) of about 2,000 g/mol to about 75,000 g/mol, about 2,000 g/mol to about 60,000 g/mol, about 2,000 g/mol to about 58,000 g/mol, or about 2,000 g/mol to about 55,000 g/mol or less, for example, in a range of about 5,000 g/mol to about 30,000 g/mol or about 5,000 g/mol to about 20,000 g/mol, has a glass transition temperature (T_{g}) of about -95 °C to about -6 °C or about -85 °C to about -10 °C, and exists in a highly viscous liquid state at room temperature (25 °C). The low-molecular-weight non-polar liquid rubber can be a non-polar rubber having a composition similar to that of a binder, and thus has low reactivity with a solid electrolyte, excellent solvent compatibility, and excellent compatibility with a binder polymer chain. Also, low-molecular-weight non-polar liquid rubber has a higher viscosity than phthalate-based organic monomolecular plasticizers, and thus, there are virtually no evaporation and/or migration issues during drying/pressing processes. When a solid electrolyte membrane is manufactured using the liquid rubber as a plasticizer along with a sulfide solid electrolyte, flexibility may be improved after a pressing process, and when an all-solid-state secondary battery including a double-layered solid electrolyte membrane is manufactured, interface formation may be smooth, manufacturing pressure may be reduced, and cell performance may be improved.

In an embodiment, the low-molecular-weight non-polar liquid rubber may be, for example, a homopolymer including a unit structure derived from a conjugated diene-based monomer. A "conjugated diene-based monomer" is also referred to as "a conjugated diene monomer".

In another embodiment, the low-molecular-weight non-polar liquid rubber may be a copolymer including unit structures derived from a conjugated diene-based first monomer and an aromatic vinyl-based second monomer. An "aromatic vinyl-based monomer" is also referred to as "an aromatic vinyl monomer".

In another embodiment, the low-molecular-weight non-polar liquid rubber may be a terpolymer including unit structures derived from a conjugated diene-based first monomer, an aromatic vinyl-based second monomer, and a conjugated polyene-based third monomer (also referred to as a "conjugated polyene" third monomer).

The conjugated diene-based first monomer may be an aliphatic conjugated diene-based monomer, and the type thereof is not limited as long as it is an aliphatic conjugated diene-based compound. The aliphatic conjugated diene-based compound may be, for example, 1,3-butadiene, isoprene, 2,3-dimethyl-1,3-butadiene, 2-chloro-1,3-butadiene, 1,3-pentadiene, 2-methyl-1,3-pentadiene, 3-methyl-1,3-pentadiene, 4-methyl-1,3-pentadiene, 1,3-hexadiene, 2-ethyl-1,3-butadiene, 2,4-hexadiene, cyclo-1,3-hexadiene, or the like, but the disclosure is not limited thereto.

A unit structure derived from the first monomer may impart relatively soft characteristics to the copolymer. For example, as the content of the unit structure derived from the first monomer increases, the viscoelastic properties and the like of the copolymer may be enhanced. When the viscoelastic properties of the copolymer are enhanced, the adhesion of the low-molecular-weight non-polar liquid rubber may be increased.

In the copolymer or homopolymer, the unit structure derived from the first monomer may have various forms. For example, 1,3-butadiene, which is a representative example of the aliphatic conjugated diene-based compound, may have a cis-1,4 structure, a trans-1,4 structure, and/or a vinyl-1,2 structure inside the copolymer. In the copolymer, when the proportion of the cis unit structure increases, crystallinity may increase and the glass transition temperature (T_{g}) may be reduced. In one or more embodiments, when the proportion of the trans unit structure increases, crystallinity may be reduced. In other embodiments, when the proportion of the vinyl unit structure increases, the glass transition temperature (T_{g}) of the copolymer may be increased. As such, the properties of a copolymer may be adjusted depending on the type and proportion of unit structure derived from the first monomer.

The aromatic vinyl-based second monomer may be non-polar and for example, may be, but is limited to, styrene, α-methylstyrene, vinyltoluene, t-butylstyrene, 1,3-dimethylstyrene, 2,4-dimethylstyrene, and ethylstyrene. The unit structure derived from the second monomer may impart relatively rigid physical properties to the copolymer due to steric hindrance. For example, when the content of the unit structure derived from the first monomer increases, the mechanical properties such as hardness, elasticity, and tensile strength of the copolymer may be improved. The unit structure derived from the second monomer may increase the cohesive strength of the copolymer, thereby imparting adhesion. When the content of the unit structure derived from the second monomer increases, the glass transition temperature (T_{g}) of the copolymer may increase. However, when the proportion of the unit structure derived from the second monomer is too high, the flexibility of the main chain may decrease, which may lead to deteriorated mechanical properties or adhesion, or increased viscosity, resulting in reduced usability.

In an embodiment, the content of the unit structure derived from the second monomer may be in a range of about 15 parts by weight to about 45 parts by weight, about 17.5 parts by weight to about 32.5 parts by weight, about 20 parts by weight to about 30 parts by weight, or about 22.5 parts by weight to about 27.5 parts by weight, with respect to 100 parts by weight of the copolymer.

The content of the unit structure derived from the first monomer may be in a range of about 20 parts by weight to about 60 parts by weight with respect to 100 parts by weight of the copolymer. Also, the content of the unit structure derived from the third monomer may be in a range of about 20 parts by weight to about 60 parts by weight with respect to 100 parts by weight of the copolymer.

The type of the conjugated polyene-based third monomer is not limited as long as it has equal to or more than three double bonds and at least two of the double bonds are conjugated, i.e., separated by a single bond. For example, the conjugated polyene compound may be, but is not limited to, myrcene, zingiberene, ocimene, α-farnesene, β-farnesene, lycopene, phytoene, and phytofluene. Among these conjugated polyene compounds, there are many environmentally friendly compounds that may be obtained from natural sources.

Conjugated polyene compounds can have a large number of double bonds (e.g., 3-20, 3-15, or 3-10 double bonds), and thus unit structures derived therefrom may have various forms. In one or more embodiments, at least three binding sites may exist in one monomer to form a network structure. If necessary, the softening point and glass transition temperature (T_{g}) of the copolymer may be adjusted using a conjugated polyene compound.

The unit structure derived from the third monomer may include a short-chain branch in which a double bond exists. The structure of the copolymer may vary depending on the density of such a branch. For example, depending on the unit structure derived from the third monomer, the copolymer may have the characteristics of a linear polymer, a branched polymer, or a star-shaped polymer.

In an embodiment, the unit structure derived from the third monomer may include a double bond. The double bond that may be included in the unit structure derived from the third monomer may impart reactivity to the copolymer. By using the copolymer, adhesion may be increased through chemical bonding, or a specific functional group may be given to the copolymer.

The third monomer may have at least 10 carbon atoms. Among conjugated polyene compounds, those having at least 10 carbon atoms may be used as the third monomer to increase the glass transition temperature (T_{g}) of the copolymer or to improve the mechanical properties thereof. In one or more embodiments, the length of the unit structure derived from the third monomer may relatively increase, and thus, the chain of the copolymer may become flexible.

Among conjugated polyene compounds having at least 10 carbon atoms, there are compounds that may significantly improve the adhesion of the copolymer due to a large number of double bonds. When compounds having these properties are used as the third monomers, excellent adhesive properties and plasticizer properties at low temperature may be achieved.

The number of carbon atoms of these conjugated polyene compounds may be, but is not limited to, 10 or more, for example, 10, 11, 12, 13, 14, 15, 16, 17, 18, 19, 20, or more. The conjugated polyene compounds can have 10 to 50, 10 to 40, or 15 to 40 carbon atoms.

If necessary, the adhesive properties and plasticizer properties may be controlled by hydrogenating multiple bonds in the copolymer. For example, the unit structures derived from the second monomer and the third monomer may include multiple bonds, and some of them may be hydrogenated to control the adhesive properties and plasticizer properties.

The properties of the copolymer may be adjusted by controlling the structure of a polymer chain, in addition to controlling the types and contents of the first, second, and third monomers described above. The copolymer may have at least one of a block structure, an alternating structure, and a random structure depending on the arrangement of the unit structures.

When the copolymer contains a block structure derived from the second monomer, the block structure can exist in a hard glassy form at the use temperature of a final product and may form a kind of clusters through chain entanglement. These clusters may not be compatible with the unit structure derived from the first monomer or the third monomer, and may have deformation stability by forming a three-dimensional network structure through physical crosslinking. The clusters may be dissociated due to high flowability at the glass transition temperature (T_{g}) or higher of such a block structure, and may easily permeate into an object to be adhered.

When the copolymer includes a block structure derived from the first monomer or the third monomer, the copolymer may have elasticity. As a result, a final product may have improved impact resistance, and may maintain adhesion even when an object to be adhered undergoes a volume change.

In an embodiment, the copolymer may include a block structure consisting of the unit structure derived from the first monomer or the third monomer at one or both ends of the polymer chain of the copolymer. When the copolymer includes such a block structure at one end thereof, a solid electrolyte membrane manufactured therefrom may have excellent toughness characteristics. The term "toughness" as used herein refers to the total amount of energy applied from the moment at which an object is deformed until the object is destroyed, and the stronger and more flexible the object, the higher the toughness. In other words, the higher the strain energy per unit volume, considering both stress and strain, the higher the toughness. In some embodiments, depending on the characteristics of the block structure included at one end of the copolymer, the copolymer may have high adhesion.

In an embodiment, in the copolymer, a block structure including the unit structure derived from the third monomer may be bound to at least one end of a random structure including unit structures derived from the first monomer and the second monomer.

In another embodiment, in the copolymer, a block structure including the unit structure derived from the first monomer may be bound to at least one end of a random structure including the unit structures derived from the second monomer and the third monomer.

When a block structure including the unit structure derived from the first monomer or the third monomer is bound to at least one end of the above-described random structure, the chain structure of the copolymer may be flexible and have sticky properties, and the copolymer may have excellent low-temperature characteristics such as interfacial resistance at low temperatures.

In another embodiment, the copolymer may include a first block including the unit structure derived from the first monomer, a second block including the unit structure derived from the second monomer, and a third block including the unit structure derived from the third monomer. Examples of these copolymers may include those in which the second block and the third block are respectively bound to both ends of the first block, those in which the first block and the third block are respectively bound to both ends of the second block, and those in which the first block and the second block are respectively bound to both ends of the third block.

Depending on the characteristics of the unit structure constituting a middle block in the copolymer, the adhesive strength, thermal stability, mechanical properties, or solubility of the copolymer as a plasticizer may be controlled.

When the copolymer contains at least three blocks, the copolymer may have a rigid chain structure, and thus, a final product may have excellent mechanical properties. For example, toughness, maximum stress, elongation at break, and the like may be improved.

In some embodiments, the copolymer may include a random structure formed by the unit structures derived from the first monomer, the second monomer, and the third monomer. When each unit structure of the copolymer forms a random structure, chain flexibility may be improved.

When the content of the branched copolymer in the copolymer is low, that is, when the linearity of the copolymer is high, the copolymer may be adhered rapidly. In some embodiments, when the amount of the branched copolymer is large, excellent physical properties may be obtained even when a relatively small amount of binder and/or plasticizer is used.

In the copolymer, at least a portion of the linear copolymer may be branched (coupled) to form a branched copolymer.

The amount of the branched copolymer in the copolymer may be in a range of about 5 wt% to about 75 wt%, about 5 wt% to about 70 wt%, about 10 wt% to about 65 wt%, about 15 wt% to about 55 wt%, about 20 wt% to about 45 wt%, or about 25 wt% to about 40 wt%, with respect to 100 wt% of the copolymer.

The content of the branched copolymer may be measured by various known methods. For example, the proportion thereof may be confirmed by gel permeation chromatography (GPC) using a polystyrene standard sample. Among peaks observed as a result of GPC measurement, the molecular weight of the branched copolymer exists in a relatively higher region than that of the linear copolymer. Thus, the proportion of the branched copolymer may be confirmed from an area ratio of a region having a relatively high molecular weight. In other embodiments, the proportion of the branched copolymer may be confirmed indirectly through a degree of branching obtained from a ratio of Mooney viscosity to solution viscosity.

The total content of the unit structures derived from the first monomer and the third monomer may be 60 wt% or more, in a range of about 60 wt% to about 90 wt%, about 5 wt% to about 85 wt%, or in a range of about 5 wt% to about 70 wt%, for example, 60 wt%, 62.5 wt%, 65 wt%, 67.5 wt%, 70 wt%, 72.5 wt%, 75 wt%, 77.5 wt%, 80 wt%, 82.5 wt%, 85 wt%, 87.5 wt%, or 90 wt%, or in a range between the above values, with respect to 100 wt% of the unit structures of the copolymer. This content may be selected depending on the conditions of use of the copolymer and the effect thereof.

A copolymer according to another embodiment may include unit structures derived from two of the first monomer, the second monomer, and the third monomer. Such a copolymer may include, for example, unit structures derived from the first monomer and the second monomer, the first monomer and the third monomer, or the second monomer and the third monomer.

These unit structures may have a random structure, or the copolymer may be a diblock copolymer having a block consisting of each unit structure, or may be a triblock copolymer in which the other unit structure blocks are respectively bound to both ends of one unit structure block.

A method of preparing the above-described copolymer may include preparing a copolymer by polymerizing a linear conjugated diene-based monomer (aliphatic conjugated diene-based first monomer), an aromatic vinyl-based second monomer (non-polar aromatic vinyl-based second monomer), and a branched conjugated diene-based third monomer (conjugated polyene-based third monomer), which constitute the copolymers.

The first monomer, the second monomer, the third monomer, and the properties of the copolymer may be as described above.

In the preparation method, an anionic polymerization initiator may be used as a catalyst. As the anionic polymerization initiator, for example, an organic lithium compound such as n-butyllithium may be used, but the disclosure is not limited thereto.

In some embodiments, a randomizing agent may be further included during the polymerization, to form a random structure. The randomizing agent may serve to activate the anionic polymerization initiator, control the polymerization reaction rate of each monomer, and control the ratio of the unit structures. Such a randomizing agent may be one commonly used in anionic polymerization, for example, ditetrahydrofurylpropane, but the disclosure is not limited thereto.

In one or more embodiments, a coupling agent may be further included during the polymerization to increase the degree of branching of the copolymer. Examples of the coupling agent may include, but are not limited to, a carbonate-based compound, a chlorosilane-based compound, an ester-based compound, and divinylbenzene.

The structure of the copolymer may vary depending on the difference in reactivity of the monomers. For example, when various monomers are polymerized simultaneously, a unit structure derived from a monomer having a relatively slow reaction rate may form a block structure at an end of the copolymer. The order of reaction of each monomer may vary depending on the structural properties of a target copolymer.

For example, when the first monomer and the second monomer are pre-polymerized, and then a third monomer is added and polymerized, a block structure including the unit structure derived from the third monomer may be formed at an end of the copolymer. In other embodiments, when the first monomer and the third monomer are pre-polymerized, and then a second monomer is added and polymerized, a block structure including the unit structure derived from the second monomer may be formed at an end of the copolymer.

In other embodiments, when one of the first monomer, the second monomer, and the third monomer is polymerized, and then the others are added, a block structure may be easily formed.

In an embodiment, the low-molecular-weight non-polar liquid rubber may be, for example, liquid butadiene rubber (BR), liquid isoprene rubber (IR), liquid styrene butadiene rubber (SBR), liquid natural rubber (NR), liquid acrylonitrile-butadiene rubber, liquid isobutylene-isoprene rubber, liquid isoprene propylene rubber, liquid styrene-butadiene-farnesene copolymer, a copolymer in which a farnesene block is formed at an end of a styrene-butadiene random structure, a copolymer in which a butadiene block is formed at an end of a styrene-farnesene random copolymer, or a combination thereof. The liquid NR, the liquid IR, or a combination thereof (NR/IR) may have a weight average molecular weight of about 5,000 g/mol to about 54,000 g/mol and a glass transition temperature of about -63 °C. In an embodiment, the liquid BR may have a weight average molecular weight of about 5,000 g/mol to about 45,000 g/mol and a glass transition temperature of about -95 °C. In another embodiment, the liquid BR may have a weight average molecular weight of about 5,000 g/mol to 9,000 g/mol and a glass transition temperature of about -85 °C to about -49 °C.

The liquid SBR may have a weight average molecular weight of about 8,500 g/mol to about 10,000 g/mol and a glass transition temperature of about -14 °C to about -6 °C.

A copolymer used as the low-molecular-weight non-polar liquid rubber may be a block copolymer or a random copolymer. The liquid styrene-butadiene-farnesene copolymer may be, for example, a block copolymer or a random copolymer. The copolymer in which a farnesene block is formed at an end of a styrene-butadiene random structure may be, for example, S/B-F 244, the copolymer in which a butadiene block is formed at an end of a styrene-farnesene random copolymer may be S/F-B 442, and a liquid styrene-butadiene-farnesene block copolymer may be, for example, S-B-F 226.

The high-molecular-weight polymer binder may have a weight average molecular weight of greater than about 75,000 g/mol but less than or equal to about 1,000,000 g/mol, about 80,000 g/mol to about 1,000,000 g/mol, about 100,000 g/mol to about 1,000,000 g/mol, for example, about 100,000 g/mol to about 800,000 g/mol, about 150,000 g/mol to about 750,000 g/mol, about 200,000 g/mol to about 700,000 g/mol, about 250,000 g/mol to about 650,000 g/mol, about 300,000 g/mol to about 600,000 g/mol, about 350,000 g/mol to about 550,000 g/mol, or about 400,000 g/mol to about 500,000 g/mol. When the weight average molecular weight of the high-molecular-weight polymer binder is within the above range, a solid electrolyte membrane having excellent adhesion to other substrates can be manufactured.

The high-molecular-weight polymer binder may be, for example, polyacrylate, polyvinyl alcohol, carboxymethyl cellulose, hydroxypropyl cellulose, diacetylcellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, styrene-butadiene rubber, hydrogenated nitrile-butadiene rubber, (meth)acrylated styrene-butadiene rubber, epoxy resin, (meth)acrylic resin, polyester resin, nylon, a copolymer including unit structures derived from a non-polar monomer and at least one polar monomer selected from a nitrile-based monomer and a (meth)acrylic monomer, an ethylene vinyl acetate copolymer, or a combination thereof.

Hydrogenated nitrile-butadiene rubber (H-NBR) may have a hydrogenation degree of about 99 % or more, a nitrile content of about 17 wt%, and a weight average molecular weight of about 300,000 g/mol to about 1,000,000 g/mol, for example, about 300,000 g/mol to about 800,000 g/mol, about 300,000 g/mol to about 700,000 g/mol, about 300,000 g/mol to about 600,000 g/mol, or about 400,000 g/mol to about 500,000 g/mol.

A weight ratio of the high-molecular-weight polymer binder to the low-molecular-weight non-polar liquid rubber may vary depending on the compositions of the polymer binder and the liquid rubber. The weight ratio of the high-molecular-weight polymer binder to the low-molecular-weight non-polar liquid rubber may be in a range of, for example, about 1:9 to about 9:1, about 1:7 to about 7:1, about 1:5 to about 5:1, or about 1:1 to about 5:1. When the weight ratio is within the above ranges, a strong solid electrolyte membrane with improved ductility and bending strength may be obtained without reducing ionic conductivity.

The total amount of the high-molecular-weight polymer binder and the low-molecular-weight non-polar liquid rubber in the solid electrolyte membrane may be in a range of about 1 part by weight to about 5 parts by weight, about 1.2 parts by weight to about 4.5 parts by weight, or about 1.3 parts by weight to about 3 parts by weight, with respect to 100 parts by weight of the total weight of the solid electrolyte membrane. When the total amount of the high-molecular-weight polymer binder and the low-molecular-weight non-polar liquid rubber is within the above ranges, a solid electrolyte membrane having excellent ionic conductivity and improved ductility, bending strength and toughness may be manufactured.

The solid electrolyte membrane may further include at least one of a dispersant, a leveling agent, or an antifoaming agent.

The dispersant serves to uniformly disperse the components of the solid electrolyte membrane.

As the dispersant, an anionic compound, a cationic compound, a nonionic compound, or a polymer compound may be used. The dispersant may be selected depending on solid electrolyte particles used. The amount of the dispersant in solids of a slurry for forming solid electrolyte membrane may be 10 parts by weight or less, or in a range of about 0.1 parts by weight to about 5 parts by weight or about 0.3 parts by weight to about 2 parts by weight, with respect to 100 parts by weight of the solid electrolyte particles, or within a range that does not affect battery characteristics.

The leveling agent may be an alkyl-based surfactant, a silicon-based surfactant, a fluorine-based surfactant, a metal-based surfactant, or the like. By mixing the surfactant, cratering that occurs when applying a solid electrolyte slurry may be prevented and smoothness may be improved. The amount of the leveling agent in solids of a slurry for forming solid electrolyte membrane may be 10 parts by weight or less, or 0.1 parts by weight to 10 parts by weight with respect to 100 parts by weight of the solid electrolyte particles, or within a range that does not affect battery characteristics. The antifoaming agent may be a mineral oil-based antifoaming agent, a silicon-based antifoaming agent, or a polymer-based antifoaming agent. The antifoaming agent may be selected depending on the solid electrolyte particles used. The amount of the antifoaming agent in solids of a slurry for forming solid electrolyte membrane may be 10 parts by weight or less, or 0.1 parts by weight to 10 parts by weight with respect to 100 parts by weight of the solid electrolyte particles, or within a range that does not affect battery characteristics.

The solid electrolyte membrane may have a thickness of about 10 microns (µm) to about 150 µm, about 15 µm to about 100 µm, about 20 µm to about 100 µm, or about 30 µm to about 100 µm. When the thickness of the solid electrolyte membrane is within the above ranges, an all-solid-state secondary battery with excellent high-rate capabilities and cycle characteristics may be manufactured.

The solid electrolyte of the solid electrolyte membrane may include a sulfide-based solid electrolyte, an oxide-based solid electrolyte, a polymer solid electrolyte, a gel electrolyte, or a combination thereof, and the gel electrolyte may include a polymer gel electrolyte.

The solid electrolyte of the solid electrolyte membrane may have a crystal structure. Here, the crystal structure may be interpreted to also include a crystalline like structure.

The sulfide-based solid electrolyte may be prepared by, for example, treating starting materials such as Li₂S, P₂S₅, and the like by melting quenching, mechanical milling, or the like. In other embodiments, after such treatment, heat treatment may be performed. The sulfide-based solid electrolyte may be amorphous or crystalline, or in a mixed state.

The sulfide-based solid electrolyte may have a crystal structure. The sulfide-based solid electrolyte may be, for example, an argyrodite-type compound.

In one or more embodiments, the sulfide-based solid electrolyte may include, for example, at least sulfur (S), phosphorus (P), and lithium (Li) as constituent elements among the sulfide-based solid electrolyte materials described above. For example, the sulfide-based solid electrolyte may be a material including Li₂S-P₂S₅. When a sulfide-based solid electrolyte material including Li₂S-P₂S₅ is used, a mixing molar ratio of Li₂S to P₂S₅ may be, for example, in a range of about 50:50 to about 90:10.

The sulfide-based solid electrolyte may be, for example, an argyrodite-type compound including at least one selected from Li₇₋ₓPS₆₋ₓClₓ where 0≤x≤2, Li₇₋ₓPS₆₋ₓBrₓ where 0≤x≤2, and Li₇₋ₓPS₆₋ₓIₓ where 0≤x≤2. The sulfide-based solid electrolyte included as the solid electrolyte may be, for example, an argyrodite-type compound including at least one selected from Li₆PS₅Cl, Li₆PS₅Br, and Li₆PS₅I.

For example, the sulfide-based solid electrolyte may include a solid electrolyte represented by Formula 1:

Formula 1 Li⁺_{12-n-z}Aⁿ⁺B²⁻_{6-z}Y'⁻_{z}
wherein, in Formula 1,
A may be P, As, Ge, Ga, Sb, Si, Sn, Al, In, Tl, V, Nb, or Ta,
B may be S, Se, or Te,
Y' may be Cl, Br, I, F, CN, OCN, SCN, or N₃, and $1 < n < 5 and 0 < z < 2 .$

The sulfide-based solid electrolyte may be a crystalline argyrodite-type solid electrolyte. The crystalline argyrodite-type solid electrolyte may be obtained by heat treatment at a high temperature of 550 °C or higher. For example, the crystalline argyrodite-type solid electrolyte may include at least one selected from Li₇₋ₓPS₆₋ₓClₓ where 0 < x < 2, Li₇₋ₓPS₆₋ₓBrₓ where 0< x < 2, and Li₇₋ₓPS₆₋ₓIₓ where 0 < x < 2. For example, the crystalline argyrodite-type solid electrolyte may include at least one selected from Li₆PS₅Cl, Li₆PS₅Br, and Li₆PS₆I. The crystalline argyrodite-type solid electrolyte may have an elastic modulus of, for example, 15 GPa or more.

The sulfide-based solid electrolyte may be, for example, at least one selected from Li₂S-P₂S₅, Li₂S-P₂S₅-LiX where X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-Lil, Li₂S-SiS₂-P₂S₅-LiI, Li₂S-B₂S₃, Li₂S-P₂S₅-ZₘSₙ where m and n are positive numbers and Z is Ge, Zn, or Ga, Li₂S-GeS₂, Li₂S-SiS₂-Li₃PO₄, Li₂S-SiS₂-LiₚMO_{q} where p and q are positive numbers and M is one of P, Si, Ge, B, Al, Ga, and In, Li₇₋ₓPS₆₋ₓClₓ (where 0≤x≤2), Li₇₋ₓPS₆₋ₓBrₓ (where 0<x≤2), and Li₇₋ₓPS₆₋ₓIₓ (where 0<x≤2).

The solid electrolyte may be, for example, an oxide-based solid electrolyte. The oxide-based solid electrolyte may be at least one selected from Li_{1+x+y}AlₓTi₂₋ₓSi_{y}P_{3-y}O₁₂ (where 0<x<2 and 0≤y<3), BaTiO₃, Pb(Zr,Ti)Os (PZT), Pb₁₋ₓLaₓZr_{1-y}Ti_{y}O₃ (PLZT) (where 0≤x<1 and 0≤y<1), Pb(Mg_{1/3}Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (where 0<x<2 and 0<y<3), LiₓAl_{y}Ti_{z}(PO₄)₃ (where 0<x<2, 0<y<1, and 0<z<3), Li_{1+x+y}(Al, Ga)ₓ(Ti, Ge)₂₋ₓSi_{y}P_{3-y}O₁₂ (where 0≤x≤1 and 0≤y≤1), LiₓLa_{y}TiO₃ (where 0<x<2 and 0<y<3), Li₂O, LiOH, Li₂CO₃, LiAlO₂, Li₂O-Al₂O₃-SiO₂-P₂O₅-TiO₂-GeO₂, and Li₃₊ₓLa₃M₂O₁₂ (where M = Te, Nb, or Zr, and x is an integer from 1 to 10). The solid electrolyte may be prepared by a sintering method or the like. For example, the oxide-based solid electrolyte may be a garnet-type solid electrolyte selected from Li₇La₃Zr₂O₁₂ (LLZO) and Li₃₊ₓLa₃Zr₂₋ₐMₐO₁₂ (M = doped LLZO, M=Ga, W, Nb, Ta, or Al, and x is an integer from 1 to 10, and 0 < a < 2).

The solid polymer electrolyte may include, for example, a mixture of a lithium salt and a polymer, or a polymer having an ion-conducting functional group. The solid polymer electrolyte may be, for example, a polyelectrolyte in a solid state at 25 °C and 1 atm. The solid polymer electrolyte may not include, for example, liquid. The solid polymer electrolyte may include a polymer, and examples of the polymer may include polyethylene oxide (PEO), polyvinylidene fluoride (PVDF), polyvinylidene fluoride-hexafluoropropylene (PVDF-HFP), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethyleneoxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), lithium 9,10-diphenylanthracene-2-sulfonate (DPASLi⁺), or a combination thereof. However, the disclosure is not limited thereto and any solid electrolyte used in the art is possible. The lithium salt may be any lithium salt that may be used in the art. The lithium salt may be, for example, LiPF₆, LiBF₄, LiSbF₆, LiAsF₆, LiClO₄, LiCF₃SO₃, Li(CF₃SO₂)₂N, Li(FSO₂)₂N, LiC₄F₉SO₃, LiAlO₂, LiAlCl₄, LiN(CₓF₂ₓ₊₁SO₂)(C_{y}F_{2y+1}SO₂) where x and y are each 1 to 20, LiCl, Lil, a mixture thereof, or the like. The polymer included in the solid polymer electrolyte may be, for example, a compound containing 10 or more, 20 or more, 50 or more, or 100 or more repeating units. The weight average molecular weight of the polymer included in the polymer solid electrolyte may be, for example, 1,000 Daltons or more, 10,000 Daltons or more, 100,000 Daltons or more, or 1,000,000 Daltons or more.

The gel electrolyte may be, for example, a polymer gel electrolyte. For example, the gel electrolyte may be in a gel state without including polymers.

For example, the polymer gel electrolyte may include a liquid electrolyte and a polymer, or may include an organic solvent and a polymer having an ion-conducting functional group. The polymer gel electrolyte may be, for example, a polyelectrolyte in a gel state at 25 °C and 1 atm. For example, the polymer gel electrolyte may not include liquid and may be in a gel state. A liquid electrolyte used in the polymer gel electrolyte may be, for example: a mixture of an ionic liquid, a lithium salt, and an organic solvent; a mixture of a lithium salt and an organic solvent; or a mixture of an ionic liquid and an organic solvent. The polymer used in the polymer gel electrolyte may be selected from polymers used in the solid polymer electrolyte. The organic solvent may be selected from organic solvents used in the liquid electrolyte. The lithium salt may be selected from lithium salts used in the solid polymer electrolyte. The ionic liquid may refer to a salt in a liquid state at room temperature or a room temperature molten salt that has a melting point below room temperature and includes ions. The ionic liquid may include, for example, at least one selected from compounds including: a) at least one cation selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and a mixture thereof; and b) at least one anion selected from BF₄-, PF₆-, AsF₆-, SbF₆-, AlCl₄-, HSO₄-, ClO₄-, CH₃SO₃-, CF₃CO₂-, Cl-, Br-, I-, SO₄²-, CF₃SO₃-, (FSO₂)₂N-, (C₂F₅SO₂)₂N-, (C₂F₅SO₂)(CF₃SO₂)N-, and (CF₃SO₂)₂N-. For example, the solid polymer electrolyte may be impregnated into a liquid electrolyte in a secondary battery, thereby forming a polymer gel electrolyte. The polymer gel electrolyte may further include inorganic particles. The polymer included in the polymer gel electrolyte may be, for example, a compound containing 10 or more, 20 or more, 50 or more, or 100 or more repeating units. The weight average molecular weight of the polymer included in the polymer gel electrolyte may be, for example, 500 Daltons or more, 1,000 Daltons or more, 10,000 Daltons or more, 100,000 Daltons or more, or 1,000,000 Daltons or more.

The solid electrolyte membrane may have, at 25 °C, an ionic conductivity of about 0.1 mS/cm to about 5 mS/cm, about 0.15 mS/cm to about 5 mS/cm, about 0.2 mS/cm to about 4 mS/cm, about 0.25 mS/cm to about 4 mS/cm, about 0.3 mS/cm to about 3 mS/cm, or about 0.34 mS/cm to about 3 mS/cm.

The solid electrolyte membrane may have an ionic conductivity of about 0.1 mS/cm to about 5 mS/cm at 25 °C, and a strain rate of 0.095 % or more, 0.099 % or more, or 0.1 % or more, or in a range of about 0.1 % to about 0.3 %. The solid electrolyte membrane may have a Young's modulus of about 10 GPa to about 20 GPa or about 12 GPa to about 16 GPa. When the Young's modulus and the strain rate are within the above ranges, the flexibility of the solid electrolyte membrane may be improved. The strain rate of the solid electrolyte membrane may be evaluated using the ratio of a bent length to a span width (14 mm) as described in Evaluation Example 2, which will be described below. Mechanical properties such as a strain rate are highly dependent on the density (or porosity) of the solid electrolyte membrane, and the strain rate of a membrane having a density of at least 95 % after pressing may be measured. The strain rate of the solid electrolyte membrane without pressing immediately after coating, corresponding to a relative density of about 60 % is higher than that of the solid electrolyte membrane after pressing.

Hereinafter, a method of manufacturing a solid electrolyte membrane, according to an embodiment, will be described as follows.

The solid electrolyte membrane according to an embodiment may be manufactured by: preparing a composition for forming a solid electrolyte membrane, the composition including a solid electrolyte, a high-molecular-weight polymer binder, a low-molecular-weight non-polar liquid rubber, and a solvent; and coating a substrate with the composition to form a coated substrate, and drying the coated substrate to form the solid electrolyte membrane on the substrate.

The composition for forming a solid electrolyte membrane may further include at least one of a dispersant, a leveling agent, or an antifoaming agent.

A solid content of the composition for forming a solid electrolyte membrane may be in a range of about 40 wt% to about 70 wt% or about 50 wt% to about 70 wt% based on 100 wt% of the composition for forming a solid electrolyte membrane. When the solid content of the composition for forming a solid electrolyte membrane is within the above ranges, the viscosity stability of a solid electrolyte slurry may be maintained during film formation, thus enabling excellent film formation. The composition for forming a solid electrolyte membrane, suitable for excellent film formation may have a viscosity of about 1,000 cps to about 7,000 cps, (1 to 7 Pa.s) for example, about 3,000 cps to about 5,000 cps. (3 - 5 Pa.s)

The solvent may include at least one selected from isobutyl isobutyrate, n-butyl butyrate, 2-ethyl hexyl acetate, octyl acetate, ethyl hexanoate, di-isobutyl ketone, n-heptyl acetate, hexyl acetate, d-Limonene, trimethylbenzene, and isopropyl benzene. For example, the solvent may include at least one selected from 2-ethyl hexyl acetate, hexyl acetate, and isopropyl benzene.

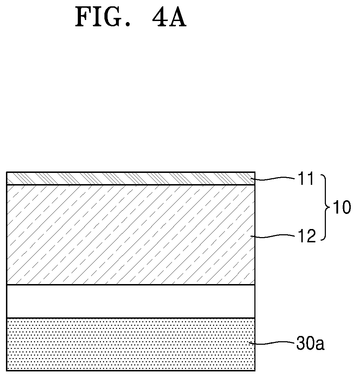

FIGS. 4A to 4C are views for explaining a method of manufacturing an all-solid-state secondary battery according to an embodiment and the all-solid-state secondary battery manufactured thereof. The all-solid-state secondary battery may include first and second solid electrolyte membranes 30a and 30b.

As illustrated in FIG. 4A, first, the first solid electrolyte membrane 30a may be laminated on a cathode 10 including a cathode current collector 11 and a cathode active material layer 12 to prepare a first laminate. First pressing may be performed on the first laminate. The first solid electrolyte membrane 30a may include a first solid electrolyte and a first polymer binder. The first pressing may be, for example, roll pressing, uni-axial pressing, flat pressing, warm isostatic pressing (WIP), cold isostatic pressing (CIP), or the like. A pressure applied during pressing may be, for example, greater than 300 MPa and less than or equal to 750 MPa. The pressure may be applied for about 5 ms to about 60 min. The pressing may be performed at a temperature of, for example, about room temperature to about 90 °C or about 20 °C to about 90 °C. In other embodiments, the pressing may be performed at a high temperature of 100 °C or higher. For example, the first pressing may be performed at a temperature of about 80 °C to about 90 °C, or 85 °C and a pressure of about 400 MPa to about 600 MPa, about 450 MPa to about 550 MPa, or 500 MPa.

Separately, a first anode active material layer 22 may be laminated on an anode current collector 21 to form an anode 20.

The second solid electrolyte membrane 30b and the anode 20 may be disposed on the first solid electrolyte membrane 30a of the first laminate to prepare a second laminate. The second solid electrolyte membrane 30b may include a second solid electrolyte, a high-molecular-weight polymer binder, and low-molecular-weight non-polar liquid rubber, and thus has excellent flexibility.

Second pressing may be performed on the second laminate, thereby completing the manufacture of an all-solid-state secondary battery according to an embodiment. The second pressing may be performed using a pressing process used in the first pressing, and may be performed under relaxed conditions compared to the first pressing. A pressure applied during the second pressing may be in a range of, for example, about 150 MPa to about 300 MPa. The pressure may be applied for about 5 ms to about 60 min. The pressing may be performed at a temperature of, for example, about room temperature to about 90 °C or about 20 °C to about 90 °C. In other embodiments, the pressing may be performed at a high temperature of 100 °C or higher. For example, the second pressing may be performed at a temperature of about 80 °C to about 90 °C, or 85 °C and a pressure of about 200 MPa to about 250 MPa.

A method of manufacturing an all-solid-state secondary battery, according to another embodiment, will be described as follows. A first laminate may be manufactured in the above-described manner.

The second solid electrolyte membrane 30b may be laminated on the anode 20 including the anode current collector 21 and the first anode active material layer 22 to prepare a second laminate. Second pressing may be performed on the second laminate. The second solid electrolyte membrane 30b may include a second solid electrolyte, a high-molecular-weight polymer binder, and low-molecular-weight non-polar liquid rubber, and thus has excellent flexibility. In the second pressing, the same pressing process as that used in the first pressing may be used. The first laminate and the second laminate may be adhered to each other, followed by third pressing, to thereby complete the manufacture of an all-solid-state secondary battery according to an embodiment. The third pressing may be performed using a pressing process used in the first pressing or the second pressing, and may be performed under relaxed conditions compared to the first pressing or the second pressing. An all-solid-state secondary battery may be manufactured by a lamination method under no pressure without additional pressing.

In other embodiments, the second solid electrolyte membrane 30b having excellent flexibility by including a low-molecular-weight non-polar liquid rubber may be laminated on the cathode 10, thereby forming a first laminate.

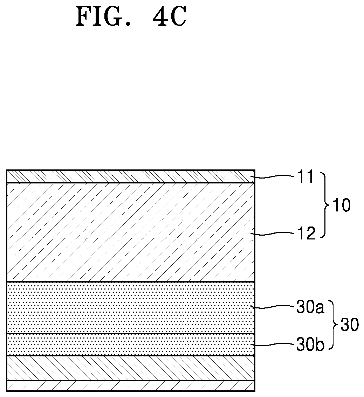

As illustrated in FIG. 4C, when the second solid electrolyte membrane 30b is in contact with an anode, the adhesion between the anode and the second solid electrolyte membrane may be maintained well even when the volume or thickness of the anode changes during charging and discharging, and it is suitable for the formation of an adhesive interface even under relatively low second pressing conditions, thus enabling stable cell operation.

As illustrated in FIG. 4C, when the second solid electrolyte membrane 30b is in contact with an anode, good adhesion between the first laminate and the second laminate may be formed even under relatively low third pressing conditions, and it is suitable for long-term maintenance of an adhesive interface, thus enabling more stable cell operation.

According to an embodiment, an all-solid-state secondary battery includes a cathode, an anode, and a solid electrolyte membrane disposed therebetween, wherein the solid electrolyte membrane includes a solid electrolyte membrane according to an embodiment.

The anode may include an anode current collector and a first anode active material layer, and the first anode active material layer may include a carbon-based anode active material, a first metal, a metalloid, or a combination thereof.

The all-solid-state secondary battery may further include a second anode active material layer between the anode current collector and the first anode active material layer, and the second anode active material layer may include a second metal material.

The second metal material may be lithium, a second metal, a lithium alloy of lithium and the second metal, or a combination thereof.

The second metal may include at least one of silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or alloy thereof.

The lithium alloy may include: lithium; and silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), Cesium (Cs), cerium (Ce), lanthanum (La), tungsten (W), tellurium (Te), or a combination thereof.

According to another embodiment, a binder for a solid electrolyte membrane includes a first binder and a second binder that have different binding energies for a sulfide-based solid electrolyte, the binding energy for the sulfide-based solid electrolyte of the first binder is less than -300,000 kcal/mol, and the binding energy for the sulfide-based solid electrolyte of the second binder is in a range of about -300,000 kcal/mol to about -50,000 kcal/mol.

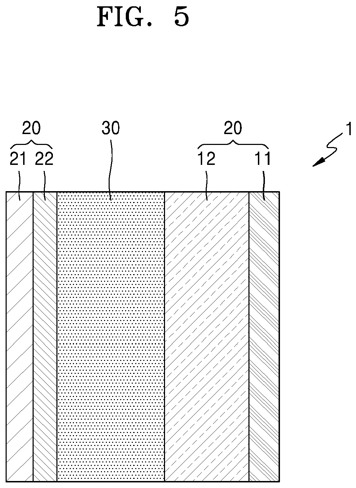

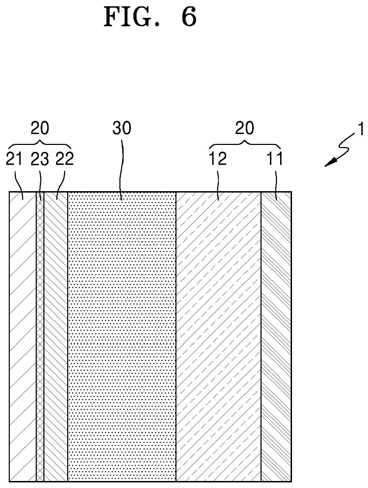

FIGS. 5 and 6 are views illustrating an all-solid-state secondary battery 1 according to an embodiment.

Referring to FIGS. 5 and 6, the all-solid-state secondary battery 1 is a secondary battery using a solid electrolyte membrane as an electrolyte.

The all-solid-state secondary battery 1 may include the cathode 10, a solid electrolyte membrane 30, and the anode 20.

### Cathode

The cathode 10 may include the cathode current collector 11 and the cathode active material layer 12.

The cathode current collector 11 may be a plate, foil or the like made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or any alloy thereof.

The cathode active material layer 12 may include, for example, a cathode active material.

The cathode active material may be a cathode active material capable of reversible intercalation and deintercalation of lithium ions. The cathode active material may be, but is not limited to, for example, a lithium transition metal oxide such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate, nickel sulfide, copper sulfide, lithium sulfide, iron oxide, or vanadium oxide, and any cathode active material that may be used in the art is possible. These cathode active materials may be used alone, or a mixture of at least two thereof may be used.

The cathode active material may include, for example, a compound represented by one of the following formulae: LiₐA_{1-b}B_{b}D₂ (where 0.90 ≤ a ≤ 1 and 0 ≤ b ≤ 0.5); LiₐE_{1-b}B_{b}O_{2-c}D_{c} (where 0.90 ≤ a ≤ 1, 0 ≤ b ≤ 0.5, and 0 ≤ c ≤ 0.05); LiE_{2-b}B_{b}O_{4-c}D_{c} (where 0 ≤ b ≤ 0.5 and 0 ≤ c ≤ 0.05); LiₐNi_{1-b-c}Co_{b}B_{c}D_{α} (where 0.90 ≤ a ≤ 1, 0 ≤ b ≤ 0.5, 0 ≤ c ≤ 0.05, and 0 < α ≤ 2); LiₐNi_{1-b-c}Co_{b}B_{c}O_{2-α}F₂ (where 0.90 ≤ a ≤ 1, 0 ≤ b ≤ 0.5, 0 ≤ c ≤ 0.05, and 0 < α < 2); LiₐNi_{1-b-c}Co_{b}B_{c}O_{2-α}F_{α} (where 0.90 ≤ a ≤ 1, 0 ≤ b ≤ 0.5, 0 ≤ c ≤ 0.05, and 0 < α < 2); LiₐNi_{1-b-c}Mn_{b}B_{c}D_{α} (where 0.90 ≤ a ≤ 1, 0 ≤ b ≤ 0.5, 0 ≤ c ≤ 0.05, and 0 < α ≤ 2); LiₐNi_{1-b-c}Mn_{b}B_{c}O_{2-α}F₂ (where 0.90 ≤ a ≤ 1, 0 ≤ b ≤ 0.5, 0 ≤ c ≤ 0.05, and 0 < α < 2); LiₐNi_{1-b-c}Mn_{b}B_{c}O_{2-α}F_{α} (where 0.90 ≤ a ≤ 1, 0 ≤ b ≤ 0.5, 0 ≤ c ≤ 0.05, and 0 < α < 2); LiₐNi_{b}E_{c}G_{d}O₂ (where 0.90 ≤ a ≤ 1, 0 ≤ b ≤ 0.9, 0 ≤ c ≤ 0.5, and 0.001 ≤ d ≤ 0.1); LiₐNi_{b}Co_{c}Mn_{d}GeO₂ (where 0.90 ≤ a ≤ 1, 0 ≤ b ≤ 0.9, 0 ≤ c ≤ 0.5, 0 ≤ d ≤ 0.5, and 0.001 ≤ e ≤ 0.1); LiₐNiG_{b}O₂ (where 0.90 ≤ a ≤ 1 and 0.001 ≤ b ≤ 0.1); LiₐCoG_{b}O₂ (where 0.90 ≤ a ≤ 1 and 0.001 ≤ b ≤ 0.1); LiₐMnG_{b}O₂ (where 0.90 ≤ a ≤ 1 and 0.001 ≤ b ≤ 0.1); LiₐMn₂G_{b}O₄ where 0.90 ≤ a ≤ 1 and 0.001 ≤ b ≤ 0.1); QO₂; QS₂; LiQS₂; V₂O₅; LiV₂O₅; LiIO₂; LiNiVO₄; Li_{(3-f)}J₂(PO₄)₃ (where 0 ≤ f ≤ 2); Li_{(3-f)}Fe₂(PO₄)₃ (where 0 ≤ f ≤ 2); and LiFePO₄. In the formulae of these compounds, A may be nickel (Ni), cobalt (Co), manganese (Mn), or a combination thereof, B may be aluminum (Al), Ni, Co, Mn, chromium (Cr), iron (Fe), magnesium (Mg), strontium (Sr), vanadium (V), a rare earth element, or a combination thereof, D may be oxygen (O), fluorine (F), sulfur (S), phosphorus (P), or a combination thereof, E may be Co, Mn, or a combination thereof, F may be F, S, P, or a combination thereof, G may be Al, Cr, Mn, Fe, Mg, lanthanum (La), cerium (Ce), Sr, V, or a combination thereof, Q may be titanium (Ti), molybdenum (Mo), Mn, or a combination thereof, I may be Cr, V, Fe, scandium (Sc), yttrium (Y), or a combination thereof, and J may be V, Cr, Mn, Co, Ni, copper (Cu), or a combination thereof. The above-mentioned compound with a coating layer on the surface may be used, or a mixture of the compound described above and another compound having a coating layer may be used. The coating layer disposed on the surface of the above-described compound may include, for example, a coating element compound, such as an oxide of a coating element, a hydroxide of a coating element, an oxyhydroxide of a coating element, an oxycarbonate of a coating element, or a hydroxycarbonate of a coating element. The compound constituting the coating layer may be amorphous or crystalline. The coating element included in the coating layer may be Mg, Al, Co, potassium (K), sodium (Na), calcium (Ca), silicon (Si), Ti, V, tin (Sn), germanium (Ge), gallium (Ga), boron (B), arsenic (As), zirconium (Zr), or a mixture thereof. A coating layer formation method may be selected from methods that do not adversely affect the physical properties of the cathode active material. The coating layer formation method may be, for example, spray coating, immersion, or the like. The coating layer formation methods will be obvious to one of ordinary skill in the art, and thus, detailed descriptions thereof will not be provided herein.

The cathode active material may include, for example, a lithium salt of a transition metal oxide having a layered rock-salt-type structure, among the above-described lithium transition metal oxides. The term "layered rock-salt-type structure" may refer to, for example, a structure in which oxygen atomic layers and metal atomic layers are regularly arranged alternately in the <111> direction of a cubic rock-salt-type structure, in which each atomic layer forms a two-dimensional plane. The term "cubic rock-salt-type structure" refers to a sodium chloride (NaCl) type structure, which is a type of crystal structure, and for example, refers to a structure in which face-centered cubic (fcc) lattices respectively formed of cations and anions are shifted by only a half of the ridge of each unit lattice. The lithium transition metal oxide having such a layered rock-salt-type structure may be, for example, a ternary lithium transition metal oxide such as LiNiₓCo_{y}Al_{z}O₂ (NCA) or LiNiₓCo_{y}Mn_{z}O₂ (NCM) (where 0 < x < 1, 0 < y < 1, 0 < z < 1, and x + y + z = 1). When the cathode active material includes a ternary lithium transition metal oxide having a layered rock-salt-type structure, the energy density and thermal stability of the all-solid-state secondary battery 1 may further be improved.

The cathode active material may be covered by a coating layer as described above. The coating layer may be any coating layer known as a coating layer for a cathode active material of an all-solid secondary battery. The coating layer may be, for example, Li₂O-ZrO₂ or the like.

When the cathode active material contains nickel (Ni) as a ternary lithium transition metal oxide such as NCA or NCM, the capacity density of the all-solid-state secondary battery 1 may be increased, and thus, metal elution from the cathode active material in a charged state may be reduced. As a result, the all-solid-state secondary battery 1 may have improved cycle characteristics.

The cathode active material may have a particle shape, such as a true spherical shape, an elliptical shape, or a spherical shape. The particle diameter of the cathode active material is not limited, and is within a range suitable for a cathode active material of an existing all-solid secondary battery. The amount of the cathode active material in the cathode 10 is not limited, and may be within a range applicable to a cathode of an existing all-solid-state secondary battery.

The cathode 10 may further include, for example, additives such as a conductive agent, a binder, a filler, a dispersant, and an auxiliary ion-conducting agent, in addition to the above-described cathode active material. Non-limiting examples of these conductive agents may include graphite, carbon black, acetylene black, Ketjen black, carbon nanotubes, carbon nanofibers, and metal powder. The binder may be, for example, styrene butadiene rubber (SBR), polytetrafluoroethylene, polyvinylidene fluoride, polyethylene, or the like. As the filler, the dispersant, the auxiliary ion-conducting agent, and the like that may be mixed in fabricating the cathode 10, known materials generally used in electrodes of all-solid-state secondary batteries may be used.

The cathode 10 may further include a solid electrolyte. The solid electrolyte included in the cathode 10 may be similar to or different from a solid electrolyte included in the solid electrolyte membrane 30. The solid electrolyte may be referred to detailed descriptions provided above for the solid electrolyte membrane 30.

The solid electrolyte included in the cathode 10 may be, for example, a sulfide-based solid electrolyte. As the sulfide-based solid electrolyte, sulfide-based solid electrolytes used in the solid electrolyte membrane 30 may be used.

In other embodiments, the cathode 10 may be impregnated with, for example, a liquid electrolyte. The liquid electrolyte may include a lithium salt and at least one of an ionic liquid and a polymer ionic liquid. The liquid electrolyte may be non-volatile. The ionic liquid may refer to a salt in a liquid state at room temperature or a room temperature molten salt that has a melting point below room temperature and includes ions. The ionic liquid may be one selected from compounds including: a) at least one cation selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and a mixture thereof; and b) at least one anion selected from BF₄-, PF₆-, AsF₆-, SbF₆-, AlCl₄-, HSO₄-, ClO₄-, CH₃SO₃-, CF₃CO₂-, Cl-, Br-, I-, SO₄²-, CF₃SO₃-, (FSO₂)₂N-, (C₂F₅SO₂)₂N-, (C₂F₅SO₂)(CF₃SO₂)N-, and (CF₃SO₂)₂N-. The ionic liquid may be, for example, at least one selected from N-methyl-N-propylpyrrolidinium bis(trifluoromethanesulfonyl)imide, N-butyl-N-methylpyrrolidium bis(3-trifluoromethylsulfonyl)imide, 1-butyl-3-methylimidazolium bis(trifluoromethylsulfonyl)imide, and 1-ethyl-3-methylimidazolium bis(trifluoromethylsulfonyl)amide. The polymer ionic liquid may contain repeating units including: a) at least one cation selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and a mixture thereof; and b) at least one anion selected from BF₄-, PF₆-, AsF₆-, SbF₆-, AlCl₄-, HSO₄-, ClO₄-, CH₃SO₃-, CF₃CO₂-, (CF₃SO₂)₂N-, (FSO₂)₂N-, Cl-, Br-, I-, SO₄²-, CF₃SO₃-, (C₂F₅SO₂)₂N-, (C₂F₅SO₂)(CF₃SO₂)N-, NO₃-, Al₂Cl₇, (CF₃SO₂)₃C-, (CF₃)₂PF₄-, (CF₃)₃PF₃-, (CF₃)4PF₂-, (CF₃)₅PF-, (CF₃)₆P-, SF₅CF₂SO₃-, SF₅CHFCF₂SO₃-, CF₃CF₂(CF₃)₂CO-, CF₃(SO₂)₂CH-, (SF₅)₃C-, and (O(CF₃)₂C₂(CF₃)₂O)₂PO-. The lithium salt may be any lithium salt that may be used in the art. The lithium salt may be, for example, LiPF₆, LiBF₄, LiSbF₆, LiAsF₆, LiClO₄, LiCF₃SO₃, Li(CF₃SO₂)₂N, Li(FSO₂)₂N, LiC₄F₉SO₃, LiAlO₂, LiAlCl₄, LiN(CₓF₂ₓ₊₁SO2)(C_{y}F_{2y+1}SO₂) (where x and y are natural numbers), LiCl, Lil, or a mixture thereof. The concentration of the lithium salt included in the liquid electrolyte may be in a range of about 0.1 M to about 5 M. The amount of the liquid electrolyte impregnated into the cathode 10 may be in a range of about 0 parts by weight to about 100 parts by weight, about 0 parts by weight to about 50 parts by weight, about 0 parts by weight to about 30 parts by weight, about 0 parts by weight to about 20 parts by weight, about 0 parts by weight to about 10 parts by weight, or about 0.01 parts by weight to about 5 parts by weight, with respect to 100 parts by weight of the cathode active material layer 12 that does not include the liquid electrolyte.

### Solid electrolyte membrane

The solid electrolyte membrane 30 may be disposed between the cathode 10 and the anode 20 and include the solid electrolyte membrane according to an embodiment.

### Anode

Referring to FIG. 5, the anode 20 may include the anode current collector 21 and the first anode active material layer 22.

The anode current collector 21 may include, for example, a base film and a metal layer on one or both sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. The base film softens or liquefies when a short circuit occurs, by including an insulating thermoplastic polymer, and thus a rapid increase in current may be suppressed by blocking battery operation. The metal layer may include, for example, copper (Cu), stainless steel, titanium (Ti), iron (Fe), cobalt (Co), nickel (Ni), or an alloy thereof. The anode current collector may further include a metal chip and/or a lead tab. More details on the base film, the metal layer, the metal chip, and the lead tab of the anode current collector may be referred to those provided below in connection with the cathode current collector 11. When the anode current collector has this structure, the weight of the anode may be reduced, resulting in improved energy density of an all-solid-state secondary battery.

The anode current collector 21 may be, for example, in the form of a plate or foil.

The first anode active material layer may include a carbon-based anode active material, a first metal, a metalloid, or a combination thereof.

In the first anode active material layer, the carbon-based anode active material may include amorphous carbon. The amorphous carbon may be, for example, carbon black (CB), acetylene black (AB), furnace black (FB), Ketjen black (KB), graphene, carbon nanotubes, carbon nanofibers, or the like. However, the disclosure is not limited thereto and any carbon that is classified as amorphous carbon in the art is possible.

The first metal or the metalloid may include, but is not limited to, at least one of indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg) silver (Ag), or zinc (Zn), and any metal anode active material or metalloid anode active material that forms an alloy or compound with lithium in the art may be used.

The first anode active material layer may include one anode active material selected from carbon-based active materials and metal or metalloid anode active materials, or may include a mixture of a plurality of different anode active materials. For example, the first anode active material layer may contain only amorphous carbon, or may include at least one metal or metalloid selected from indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), and zinc (Zn). In other embodiments, the first anode active material layer may contain only amorphous carbon, or may include a composite of amorphous carbon and at least one metal or metalloid anode active material selected from indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), and zinc (Zn). A composite ratio of amorphous carbon to metal or metalloid anode active material such as silver or the like in the composite thereof may be in a range of, for example, about 10:1 to about 1:2, about 5:1 to about 1:1, or about 4:1 to about 2:1 on a weight ratio basis. However, the disclosure is not limited to this range, and the composite ratio may be selected depending on the required characteristics of the all-solid-state secondary battery. When the first anode active material layer has such composition, the cycle characteristics of the all-solid-state secondary battery may further be improved.

The anode active material included in the first anode active material layer may include, for example, a mixture of first particles consisting of amorphous carbon and secondary particles consisting of a metal or a metalloid. The mixture may be a simple mixture of first particles and second particles or a resulting mixture physically bound by a binder. The metal or the metalloid may include, for example, at least one selected from indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), and zinc (Zn). In other embodiments, the metalloid may be a semiconductor. The amount of the second particles may be in a range of about 8 wt% to about 60 wt%, about 10 wt% to about 50 wt%, about 15 wt% to about 40 wt%, or about 20 wt% to about 30 wt%, with respect to a total weight of the mixture. When the amount of the secondary particles is within the above range, for example, the cycle characteristics of the all-solid-state secondary battery 1 may further be improved.

The first anode active material layer may include: i) a composite of first particles consisting of amorphous carbon and second particles consisting of a metal or a metalloid, or ii) a mixture of first particles consisting of amorphous carbon and second particles consisting of a metal or a metalloid, and the amount of the second particles may be in a range of about 1 wt% to about 60 wt% with respect to a total weight of the composite or mixture.

The first anode active material layer may have a thickness of, for example, about 10 nm to about 10 µm, about 100 nm to about 10 µm, about 200 nm to about 10 µm, about 300 nm to about 10 µm, about 400 nm to about 10 µm, about 500 nm to about 10 µm, about 1 µm to about 10 µm, about 1 µm to about 9 µm, about 1 µm to about 8 µm, about 2 µm to about 7 µm, or about 3 µm to about 7 µm. When the thickness of the first anode active material layer is within the above range, short circuit of the all-solid-state secondary battery may be suppressed, and the cycle characteristics thereof may be improved.

In other embodiments, the first anode active material layer 22 may include a composite anode active material. The composite anode active material may include, for example, a carbon-based support and a metal-based anode active material supported on the carbon-based support. When the composite anode active material has such a structure, localization of the metal-based anode active material in the first anode active material layer may be prevented and uniform distribution thereof may be obtained. As a result, the cycle characteristics of the all-solid-state secondary battery 1 including the first anode active material layer 22 may further be improved.

The metal-based anode active material supported on the carbon-based support may include, for example, a metal, a metal oxide, a composite of a metal and a metal oxide, or a combination thereof. Non-limiting examples of the metal may include gold (Au), platinum (Pt), palladium (Pd), silicon (Si), silver (Ag), aluminum (Al), bismuth (Bi), tin (Sn), tellurium (Te), and zinc (Zn). Non-limiting examples of the metal oxide may include gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, and zinc (Zn) oxide. The metal oxide may include, for example, AuₓO_{y} (where 0<x≤2 and 0<y≤3), PtₓO_{y} (where 0<x≤1 and 0<y≤2), PdₓO_{y} (where 0<x≤1 and 0<y≤1), SiₓO_{y} (where 0<x≤1 and 0<y≤2), AgₓO_{y} (where 0<x≤2 and 0<y≤1), AlₓO_{y} (where 0<x≤2 and 0<y≤3), BiₓO_{y} (where 0<x≤2 and 0<y≤3), SnₓO_{y} (where 0<x≤1 and 0<y≤2), TeₓO_{y} (where 0<x≤1 and 0<y≤3), ZnₓO_{y} (where 0<x≤1 and 0<y≤1), or a combination thereof. The composite of a metal and a metal oxide may include, for example, a composite of Au and AuₓO_{y} (where 0<x≤2 and 0<y≤3), a composite of Pt and PtₓO_{y} (where 0<x≤1 and 0<y≤2), a composite of Pd and PdₓO_{y} (where 0<x≤1 and 0<y≤1), a composite of Si and SiₓO_{y} (where 0<x≤1 and 0<y≤2), a composite of Ag and AgₓO_{y} (where 0<x≤2 and 0<y≤1), a composite of Al and AlₓO_{y} (where 0<x≤2 and 0<y≤3), a composite of Bi and BiₓO_{y} (where 0<x≤2 and 0<y≤3), a composite of Sn and SnₓO_{y} (where 0<x≤1 and 0<y≤2), a composite of Te and TeₓO_{y} (where 0<x≤1 and 0<y≤3), a composite of Zn and ZnₓO_{y} (where 0<x≤1 and 0<y≤1), or a combination thereof.

The carbon-based support may be, for example, amorphous carbon. The amorphous carbon may be, for example, carbon black (CB), acetylene black (AB), furnace black (FB), Ketjen black (KB), graphene, activated carbon, carbon nanofibers (CNFs), or carbon nanotubes (CNTs). However, the disclosure is not limited thereto and any carbon that is classified as amorphous carbon in the art is possible. Amorphous carbon may be carbon that does not have crystallinity or has very low crystallinity and may be distinguished from crystalline carbon or graphitic carbon. The carbon-based material may be, for example, a carbon-based anode active material.

The composite anode active material may have, for example, a particle form. The particle diameter of the composite anode active material in particle form may be in a range of, for example, about 10 nm to about 4 µm, about 10 nm to about 1 µm, about 10 nm to about 500 nm, about 10 nm to about 200 nm, or about 10 nm to about 100 nm. When the particle diameter of the composite anode active material is within the above range, reversible absorption and/or desorption of lithium during charging and discharging may be more facilitated. The metal-based anode active material supported on the support may have, for example, a particle form. The particle diameter of the metal-based anode active material may be in a range of, for example, about 1 nm to about 200 nm, about 1 nm to about 150 nm, about 5 nm to about 100 nm, or about 10 nm to about 50 nm. The carbon-based support may have, for example, a particle form. The particle diameter of the carbon-based support may be in a range of, for example, about 10 nm to about 2 µm, about 10 nm to about 1 µm, about 10 nm to about 500 nm, about 10 nm to about 200 nm, or about 10 nm to about 100 nm. When the particle diameter of the carbon-based support is within the above range, the carbon-based support may be more uniformly arranged in the first anode active material layer. The carbon-based support may be, for example, nanoparticles having a particle diameter of 500 nm or less. The particle diameter of the composite anode active material, the particle diameter of the metal-based anode active material, and the particle diameter of the carbon-based support may be, for example, average particle diameters. The average particle diameter may be, for example, a median diameter (D50) measured by using a laser particle size distribution analyzer. In other embodiments, the average particle diameter may be, for example, determined automatically by using software from an electron microscope image, or may be determined manually by manual means.

In the all-solid-state secondary battery 1 according to an embodiment, as illustrated in FIG. 6, a second anode active material layer 23 may be disposed between the anode current collector 21 and the first anode active material layer 22.

The second anode active material layer 23 may be disposed during battery assembly, or may be absent during battery assembly and may be formed as a precipitation layer after charging.

The second anode active material layer may include a second metal material.

The second metal material may be lithium, a second metal, a lithium alloy of lithium and the second metal, or a combination thereof.

The second metal may include at least one selected from silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), Cesium (Cs), cerium (Ce), lanthanum (La), tungsten (W), tellurium (Te), and alloy thereof.

The lithium alloy may include: lithium; and silver (Ag), tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), lanthanum (La), tungsten (W), tellurium (Te), or a combination thereof.

The second anode active material layer may be lithium metal or a second metal applied onto a current collector. In other embodiments, the second anode active material layer may be lithium metal precipitated during charging or a lithium alloy layer. The volume and thickness of the second anode active material layer may increase due to lithium precipitation during charging. In one or more embodiments, the second metal may form a Li-M2 (second metal) alloy through a reversible reaction during charging and discharging of the all-solid-state secondary battery. In a process of charging or disposing the all-solid-state secondary battery, or both processes, the second anode active material layer may be formed as a precipitation layer or a deposition layer, and the second anode active material layer may be a lithium metal layer or a lithium metal alloy layer.

In the process of charging or disposing the all-solid-state secondary battery, or both processes, the second metal in the second anode active material layer may form an alloy with lithium.

The second anode active material layer may be disposed on, for example, adhered to the first anode active material layer through pressing. During the pressing process, some of the lithium contained in the second anode active material layer may be injected into the first anode active material layer.

Disposition (e.g., bonding) may be a pressure compression process.

In another embodiment, in a process of charging or disposing the all-solid-state secondary battery, or both processes, the second anode active material layer may further be formed as a precipitation layer. The second anode active material layer may be a lithium metal layer or a lithium metal alloy layer. The second anode active material layer may have a thickness of, for example, 1 µm or more, 5 µm or more, or 10 µm or more, or in a range of about 10 µm to about 1,000 µm, about 10 µm to about 500 µm, about 10 µm to about 200 µm, about 10 µm to about 100 µm, or about 10 µm to about 50 µm.

### Manufacture of cathode

Materials constituting the cathode active material layer 12, i.e., a cathode active material, a binder, and the like, may be added to a non-polar solvent to prepare a slurry. The prepared slurry may be applied onto the cathode current collector 11 and dried.

The cathode current collector may include, for example, a base film and a metal layer on one or both sides of the base film. The base film may include, for example, a polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. The base film softens or liquefies when a short circuit occurs, by including an insulating thermoplastic polymer, and thus a rapid increase in current may be suppressed by blocking battery operation. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The metal layer may serve as an electrochemical fuse and break in the event of overcurrent, thus performing a short-circuit prevention function. The limit current and the maximum current may be adjusted by adjusting the thickness of the metal layer. The metal layer may be plated or deposited on the base film. When the thickness of the metal layer is reduced, the limit current and/or the maximum current of the cathode current collector 11 may be reduced, and thus, the stability of a lithium battery in the event of a short circuit may be improved. A lead tab may be added on the metal layer for connection to the outside. The lead tab may be welded to the metal layer or a metal layer/base film stack by ultrasonic welding, laser welding, spot welding, or the like. The metal layer may be electrically connected to the lead tab while the base film and/or the metal layer is melted during welding. To make welding between the metal layer and the lead tab more rigid, a metal chip may be added between the metal layer and the lead tab. The metal chip may be foil of the same material as a metal of the metal layer. The metal chip may be, for example, metal foil or metal mesh. The metal chip may be, for example, aluminum foil, copper foil, SUS foil, or the like. The lead tab may be welded to a metal chip/metal layer stack or a metal chip/metal layer/base film stack by welding to the lead tab after the metal chip is disposed on the metal layer. The metal layer or the metal layer/metal chip stack may be electrically connected to the lead tab while the base film, the metal layer, and/or the metal chip are melted during welding. A metal chip and/or a lead tab may be added on a portion of the metal layer. The base film may have a thickness of, for example, about 1 µm to about 50 µm, about 1.5 µm to about 50 µm, about 1.5 µm to about 40 µm, or about 1 µm to about 30 µm. When the thickness of the base film is within the above ranges, the weight of a cathode may be more effectively reduced. The base film may have a melting point of, for example, about 100 °C to about 300 °C, about 100 °C to about 250 °C, or about 100 °C to about 200 °C. When the melting point of the base film is within the above range, the base film may be melted and easily coupled to the lead tab in the lead tab welding process. Surface treatment such as corona treatment may be performed on the base film to improve the adhesion between the base film and the metal layer. The metal layer may have a thickness of, for example, about 0.01 µm to about 3 µm, about 0.1 µm to about 3 µm, about 0.1 µm to about 2 µm, or about 0.1 µm to about 1 µm. When the thickness of the metal layer is within the above range, the stability of the cathode may be secured while maintaining conductivity. The metal chip may have a thickness of, for example, about 2 µm to about 10 µm, about 2 µm to about 7 µm, or about 4 µm to about 6 µm. When the thickness of the metal chip is within the above range, connection between the metal layer and the lead tab may be more facilitated. When the cathode current collector 11 has this structure, the weight of the electrode may be reduced, resulting in improved energy density of an all-solid-state secondary battery.

The cathode current collector may be omitted. The cathode current collector may further include a carbon layer disposed on one or both sides of a metal substrate. By further disposing a carbon layer on the metal substrate, the metal of the metal substrate may be prevented from being corroded by the solid electrolyte included in a cathode layer and the interfacial resistance between the cathode active material layer and the cathode current collector may be reduced. The carbon layer may have a thickness of, for example, about 0.1 µm to about 5 µm, about 0.1 µm to about 3 µm, or about 0.1 µm to about 1 µm. When the thickness of the carbon layer is too small, it may be difficult to completely block contact between the metal substrate and the solid electrolyte. When the thickness of the carbon layer is too large, the energy density of the all-solid-state secondary battery may be reduced. The carbon layer may include amorphous carbon, crystalline carbon, or the like.

The obtained laminate may be pressed to manufacture the cathode 10. Pressing may be, for example, pressing using a roll press, a flat press, or hydrostatic pressure. However, the disclosure is not limited to these methods, and any pressing used in the art is possible. The pressing process may be omitted. A mixture of materials constituting the cathode active material layer 12 may be compacted and molded into a pellet form or stretched (molding) into a sheet form, thereby completing the manufacture of the cathode 10. When the cathode 10 is manufactured by this method, the cathode current collector 11 may be omitted. In other embodiments, the cathode 10 may be used after being impregnated with an electrolyte solution.

### Manufacture of all-solid-state secondary battery

The anode 20, the solid electrolyte membrane 30, and the cathode 10 may be prepared, and the cathode 10 and the anode 20 may be stacked with the solid electrolyte membrane 30 interposed therebetween, or pressed after stacking, to thereby complete the manufacture of the all-solid-state secondary battery 1.

The pressing may be, for example, roll pressing, uni-axial pressing, flat pressing, warm isostatic pressing (WIP), or cold isostatic pressing (CIP). However, the disclosure is not limited to these methods, and any pressing used in the art is possible. A pressure applied during pressing may be in a range of, for example, about 50 MPa to about 750 MPa. The pressure may be applied for about 5 ms to about 60 min. The pressing may be performed at a temperature of, for example, 90 °C or less, or about 20 °C to about 90 °C. In other embodiments, the pressing may be performed at a high temperature of 100 °C or higher.

The cathode 10 may be disposed on one surface of the solid electrolyte membrane 30 to which the anode 20 is adhered, followed by pressing at a certain pressure, thereby disposing, e.g., adhering the cathode 10 on/to the surface of the solid electrolyte membrane 30. In other embodiments, the cathode 10 impregnated with a liquid electrolyte may be stacked without pressing, to manufacture a battery.

The pressing may be, for example, roll pressing, uni-axial pressing, flat pressing, warm isostatic pressing (WIP), or cold isostatic pressing (CIP). However, the disclosure is not limited to these methods, and any pressing used in the art is possible. A pressure applied during pressing may be in a range of, for example, about 50 MPa to about 750 MPa. The pressure may be applied for about 5 ms to about 60 min. The pressing may be performed at a temperature of, for example, about room temperature to about 90 °C or about 20 °C to about 90 °C. In other embodiments, the pressing may be performed at a high temperature of 100 °C or higher.

The present inventive concept will be described in further detail with reference to the following examples and comparative examples. However, these examples are provided for illustrative purposes only and are not intended to limit the scope of the present inventive concept.

### EXAMPLES

### Preparation of low-molecular-weight non-polar liquid rubber

### Preparation Example 1: Preparation of L-BR (1,4-polybutadiene)

1,3-butadiene (21.1 mmoles) was mixed with a monomeric neodymium versatate (1.62 mmoles) solution, and then diisobutylaluminum hydride (70.1 mmoles), triisobutylaluminum (21.5 mmoles), and diisobutylaluminum chloride (3.5 mmoles) were added thereto, to prepare a catalyst. The content of neodymium in the monomeric neodymium versatate was 1.5×10⁻⁴ mole per 100 g of the monomer. For a polymerization reaction, nitrogen was sufficiently blown into a 5 L glass pressure reactor, and then a cyclohexane polymerization solvent was added in an amount 6 times the amount of the monomer. The catalyst was transferred and added under nitrogen charge, and then 400 g of butadiene as a monomer was added, and a polymerization reaction was performed at 70 °C for 2 hours. After the polymerization reaction, a reaction terminator and an antioxidant were added to terminate the reaction. The remaining solvent was removed from the reaction product by using a rotary evaporator. As a result, L-BR (1,4-polybutadiene) having a weight average molecular weight of 36,000 g/mol was obtained.

### Preparation Example 2: Preparation of random copolymer L-SBR (S/B/F 226) of styrene, butadiene and farnesene

2,200 g of cyclohexane, 400 ppm of ditetrahydrofurylpropane (DTHFP) as a randomizing agent, 80 g of styrene, 80 g of butadiene, and 240 g of β-farnesene were added into a 5L reactor purged with nitrogen and mixed. The temperature of the reactor was adjusted to 50 °C, and then n-butyllithium was added to initiate the reaction. When the temperature of the reactor reached the highest point by an exothermic reaction, the reaction was continued for another 10 minutes to allow all the monomers to react, and then (triethoxysilylpropyl)diethylamine was added in an amount of 1.1 molar equivalents with respect to the total amount of the monomers to complete the polymerization. The remaining solvent was removed from the reaction product by using a rotary evaporator. As a result, a styrene/butadiene/farnesene random copolymer (S/B/F 226) containing 20 wt% of styrene, 20 wt% of butadiene, and 60 wt% of farnesene, having a weight average molecular weight of 20,000 g/mol, and represented by Formula 2 was prepared. In this regard, 8 wt% of the copolymer was coupled to form a branched structure having a weight average molecular weight of 43,000 g/mol. 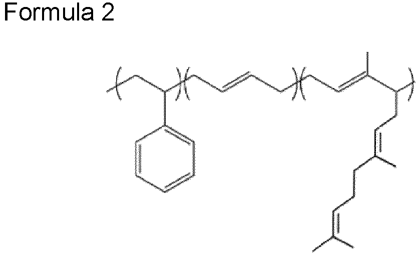 wherein, in Formula 2, a mixing weight ratio of repeating units of styrene, butadiene, and farnesene was 2:2:6.

### Preparation of solid electrolyte

### Example 1

98 parts by weight of an argyrodite-type sulfide solid electrolyte (Li₆PS₅Cl), 1.5 parts by weight of polyacrylate (weight average molecular weight: 500,000 g/mol), which is a high-molecular-weight polymer binder (hereinafter, referred to as "binder"), 1.5 parts by weight of the liquid butadiene rubber (L-BR) of Preparation Example 1, which is low-molecular-weight liquid rubber as a plasticizer, 0.5 parts by weight of a non-ionic dispersant (manufactured by CRODA, Hypermer KD13), and 66.64 parts by weight of octyl acetate as a solvent were added into a container and mixed by using a paste mixer, thereby preparing a composition for forming a solid electrolyte membrane, having a solid content of about 60 wt%.

A butadiene polymer having a cis structure content of 97 % (Kumho Petrochemical Company; NdBR40) was prepared as a liquid butadiene rubber. The liquid butadiene rubber (L-BR) of Preparation Example 1 had a glass transition temperature of -85 °C, a weight average molecular weight of 36,000 g/mol, and a viscosity of 50,000 cps. (50 Pa.s)

A mixing weight ratio of the binder to the low-molecular-weight non-polar liquid rubber was 1:1. In this regard, the binder (polyacrylate) is a terpolymer containing ethylacrylate-butylacrylate-butylmethacrylate repeating units, and a weight ratio thereof is 1:1:1.

The composition for forming a solid electrolyte membrane was applied onto a release film and coated using a doctor blade, followed by primary drying in a convection oven at a temperature of 80 °C for 30 minutes and vacuum drying in a vacuum oven at 70 °C for 2 hours, thereby forming a solid electrolyte membrane having a thickness of about 100 µm.

### Examples 2-3

Solid electrolyte membranes were manufactured in the same manner as in Example 1, except that, in preparing the composition for forming a solid electrolyte membrane, compositions of the binder and the low-molecular-weight non-polar liquid rubber were changed as shown in Table 1.

### Comparative Examples 1-3

Solid electrolyte membranes were manufactured in the same manner as in Example 1, except that, in preparing the composition for forming a solid electrolyte membrane, the binder was added in the amounts shown in Table 1, and the low-molecular-weight non-polar liquid rubber was not added.

**Table 1**

| Classification | Amount of binder (wt%) | Amount of plasticizer (low-molecular-weight liquid rubber) (wt%) | Low-molecular-weight non-polar liquid rubber |
|---|---|---|---|
| Example 1 | 1.5 | 1.5 | L-BR |
| Example 2 | 2 | 2 | L-BR |
| Example 3 | 3 | 3 | L-BR |
| Comparative Example 1 | 1.5 | - | - |
| Comparative Example 2 | 2 | - | - |
| Comparative Example 3 | 3 | - | - |

In Table 1, the amounts of binder and plasticizer are expressed in weight %, and the weight basis is based on the total weight of the solid electrolyte membrane (solid electrolyte + binder + plasticizer + nonionic dispersant) (excluding solvent).

### Comparative Example 4

A solid electrolyte membrane was manufactured in the same manner as in Example 3, except that, in preparing the composition for forming a solid electrolyte membrane, polyethylene glycol (400) (weight average molecular weight: 400 g/mol) was used instead of the low-molecular-weight non-polar liquid rubber.

### Comparative Example 5

A solid electrolyte membrane was manufactured in the same manner as in Example 3, except that, in preparing the composition for forming a solid electrolyte membrane, dioctylphthalate (DOP) was used instead of the low-molecular-weight non-polar liquid rubber. A mixing weight ratio of plasticizer (dioctylphthalate) /binder was 1.

**Table 2**

| Classification | Amount of binder (wt%) | Amount of plasticizer | Plasticizer |
|---|---|---|---|
| Example 3 | 3 | 3 | L-BR |
| Comparative Example 3 | 3 | - | - |
| Comparative Example 4 | 3 | 3 | PEG(400) |
| Comparative Example 5 | 3 | 3 | DOP(P/B=1) |

| | | | |
|---|---|---|---|
| In Table 2, P/B indicates the weight ratio of plasticizer/binder. | | | |

### Example 4

A solid electrolyte membrane was manufactured in the same manner as in Example 3, except that, in preparing the composition for forming a solid electrolyte membrane, the L-SBR (viscosity: 12,900 cps) (12.9 Pa.s) of Preparation Example 2 was used as the low-molecular-weight non-polar liquid rubber.

### Example 5

A solid electrolyte membrane was manufactured in the same manner as in Example 4, except that, in preparing the composition for forming a solid electrolyte membrane, the mixing weight ratio (P/B) of the plasticizer to the binder was changed to 0.5.

**Table 3**

| Classification | Amount of binder (wt%) | Amount of plasticizer (%) | Plasticizer |
|---|---|---|---|
| Example 3 | 3 | 3 | L-BR (P/B=1) |
| Example 4 | 3 | 3 | L-SBR (P/B=1) |
| Example 5 | 3 | 1.5 | L-SBR (P/B=0.5) |
| Comparative Example 3 | 3 | - | - |
| Comparative Example 5 | 3 | 3 | DOP |

### Manufacture of all-solid secondary battery

### Example 6

### Cathode

LiNi_{0.8}Co_{0.15}Al_{0.05}O₂ (NCA) (D₅₀=14 µm) was prepared as a cathode active material.

Crystalline argyrodite-type solid electrolyte (Li₆PS₅Cl) powder was prepared as a solid electrolyte. Carbon nanofibers (CNFs) were prepared as a conductive agent, and polyvinylidene fluoride (PVDF) was prepared as a binder. The cathode active material, the solid electrolyte, the conductive agent, and the binder were mixed in a weight ratio of 84:14.8:0.2:1.0, and then mixed with octylacetate as a solvent to prepare a slurry, and then the slurry was applied onto a cathode current collector made of 18 µm-thick carbon-coated aluminum foil to prepare a cathode. The cathode active material layer had a thickness of about 100 µm (cathode 4 mAh/cm² L/L).

### Anode

A carbon-silver (AgC) anode manufactured according to the following process and was used as an anode.

The carbon-silver (AgC) anode was prepared by forming a 10 µm-thickness anode active material layer containing a composite (AgC) including a carbon-based active material and Ag on a 10 µm-thick stainless steel substrate.

For the anode active material layer, powder, in which carbon black (CB) having an average particle diameter of about 38 nm as a carbon-based material and Ag particles having an average particle diameter of about 60 nm were mixed in a weight ratio of 3:1, was prepared. 4 g of the mixed powder and 6 g of an NMP solution including 5 wt% of a PVDF binder were mixed, and NMP was added little by little while stirring to prepare an anode active material layer slurry. The anode active material layer slurry was applied onto stainless steel substrate by using a blade coater, and dried in an air atmosphere at 80 °C for 20 minutes. Subsequently, the dried resultant was vacuum-dried at 100 °C for 12 hours to thereby complete the manufacture of an anode.

### Solid electrolyte membrane

A laminate was prepared by placing the solid electrolyte membrane (1SE) manufactured according to Comparative Example 1 on the cathode. The prepared laminate was subjected to warm isostatic pressing (WIP) at 85 °C and a pressure of 500 MPa for 30 minutes as a first pressing process to manufacture a cathode/1SE structure. The 1SE had a thickness of about 50 µm after pressing.

The cathode/1SE structure, the solid electrolyte membrane (2SE) manufactured according to Example 4 (thickness: about 100 µm before pressing), and the anode were sequentially placed to prepare a laminate, and the laminate was subjected to WIP at 85 °C and a pressure of 200 MPa for 30 minutes as a second pressing process to manufacture a cathode/1SE/2SE/anode structure, thereby completing the manufacture of an all-solid-state secondary battery.

### Example 7

An all-solid-state secondary battery was manufactured in the same manner as in Example 6, except that the solid electrolyte membrane manufactured according to Example 3 was used instead of the solid electrolyte membrane manufactured according to Example 4.

### Comparative Example 6

An all-solid-state secondary battery was manufactured in the same manner as in Example 6, except that the solid electrolyte membrane of Comparative Example 3 was used as a 2SE.

### Evaluation Example 1: Ionic conductivity

As solid electrolyte membrane samples, the solid electrolyte membranes of Examples 1 and 3, or the second solid electrolyte membrane (2nd SE) obtained according to Example 4 used in the all-solid-state secondary battery of Example 6 were prepared. Ten sheets of each of the solid electrolyte membrane samples were stacked, and then pressed at a pressure of 4 tons to thereby manufacture an indium blocking cell, to manufacture a specimen for measuring ionic conductivity. A symmetric cell was prepared by placing indium (In) electrodes having a thickness of 50 µm and a diameter of 13 mm respectively on both surfaces of the specimen. The impedance of the solid electrolyte membrane was measured by a 2-probe method using an impedance analyzer at 25 °C. The frequency range was set to 0.1 Hz to 1 MHz, and the amplitude voltage was set to 10 mV. A resistance value was calculated from the arc of a Nyquist plot, and then ionic conductivity was calculated in consideration of the area and thickness of the specimen.

As a result, it can be confirmed that the solid electrolyte membranes of Examples 1, 3, and 4 had excellent ionic conductivity, i.e., 0.45 mS/cm, 0.36 mS/cm, and 0.45 mS/cm, respectively.

### Evaluation Example 2: Evaluation of strain rate and Young's modulus

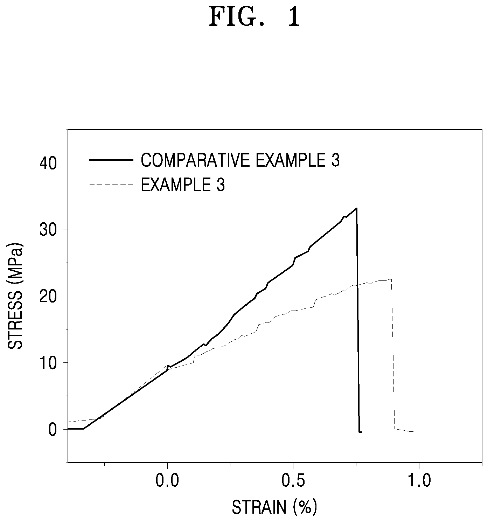

The strain rate of each of the solid electrolyte membranes of Examples 1 to 3 and Comparative Examples 1 to 5 having a width of 12 mm and a length of 30 mm was evaluated using the ratio of a bent length to a span width (14 mm), and the evaluation results thereof are shown in Tables 4 and 5. Stress changes according to strain rate from preload in the solid electrolyte membranes of Example 3 and Comparative Example 3 are illustrated in FIG. 1. Young's modulus is called flexural or bending modulus and was measured by DMA800 (TA Instruments), solid electrolyte membrane specimens were prepared through ASTM standard D412 (Type V specimens), changes in strain against stress of the specimens were measured at 25 °C, a relative humidity of about 30 %, and a rate of 5 mm/min, and Young's modulus (tensile modulus) was obtained from the slope of a stress-strain curve.

**Table 4**

| Classification | Amount of binder (wt%) | Amount of plasticizer (low-molecular-weight liquid rubber) (wt%) | Low-molecular-weight non-polar liquid rubber | Strain rate (%) | Young's modulus (GPa) |
|---|---|---|---|---|---|
| Example 1 | 1.5 | 1.5 | L-BR | 0.099 | 15.9 |
| Example 2 | 2 | 2 | L-BR | 0.119 | 15.7 |
| Example 3 | 3 | 3 | L-BR | 0.297 | 12.2 |
| Comparative Example 1 | 1.5 | - | - | 0.095 | 23.6 |
| Comparative Example 2 | 2 | - | - | - | 22.3 |
| Comparative Example 3 | 3 | - | - | - | 23.2 |

Referring to Table 4, it can be confirmed that, as the amount of the binder in each of the solid electrolyte membranes of Examples 1 to 3 increases, the effect of adding the low-molecular-weight non-polar liquid rubber as a plasticizer is increased, and the solid electrolyte membranes of Examples 1 to 3 have increased strain rates compared to Comparative Example 1 and have reduced Young's modulus compared to Comparative Examples 1 to 3, resulting in improved flexibility.

Young's modulus is a parameter indicating ductility, and in Comparative Examples 1 to 3, Young's modulus was maintained even when the amount of the binder was increased. From this, the solid electrolyte membranes of Comparative Examples 1 to 3 showed no change in ductility.

In contrast, it can be confirmed that the solid electrolyte membranes of Examples 1 to 3 have increased ductility due to reduced Young's modulus compared to Comparative Examples 1 to 3.

Referring to FIG. 1, it can also be confirmed that the solid electrolyte membrane of Example 3 including low-molecular-weight non-polar liquid rubber as a plasticizer has a flexibility improvement effect due to use of the low-molecular-weight non-polar liquid rubber, compared to the solid electrolyte membrane of Comparative Example 3 not including a plasticizer.

**Table 5**

| Classification | Amount of binder (wt%) | Amount of plasticizer (wt%) | Plasticizer | Strain rate (%) |
|---|---|---|---|---|
| Example 3 | 3 | 3 | L-BR | 0.297 |
| Comparative Example 3 | 3 | - | - | 0.201 |
| Comparative Example 4 | 3 | 3 | PEG(400) | 0.138 |
| Comparative Example 5 | 3 | 3 | DOP | 0.174 |

Referring to Table 5, the solid electrolyte membrane of Example 3 exhibited a high strain rate compared to the solid electrolyte membranes of Comparative Examples 3-5.

In the solid electrolyte membrane of Comparative Example 4, PEG400 is used as a plasticizer, and the conductivity of the solid electrolyte membrane is greatly reduced to 0.25 mS/cm due to the polar ether group in a PEG chain. The solid electrolyte membrane of Comparative Example 5 has poor mechanical properties and low reproducibility due to evaporation issue, side reactions and the like in drying/pressing processes during a solid electrolyte film formation process, when organic monomeric DOP is applied.

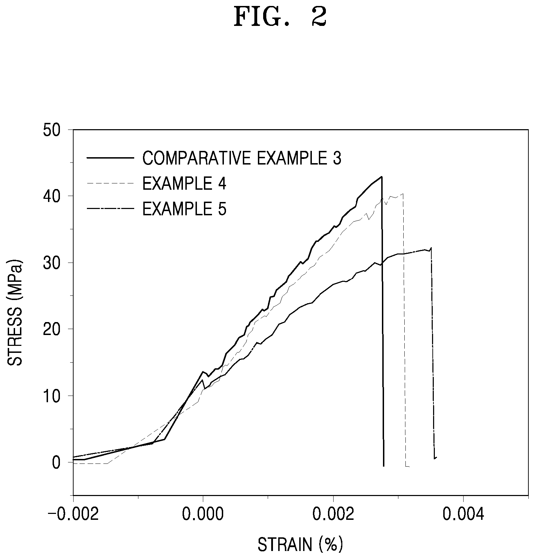

The strain rates of the solid electrolyte membranes of Examples 4 and 5 and Comparative Example 3 were evaluated, the results thereof are shown in Table 6, and some of the evaluation results are illustrated in FIG. 2. In this regard, the solid electrolyte membranes were formed to a thickness of 85 µm. Stress changes according to strain in the solid electrolyte membranes of Examples 4 and 5 and Comparative Example 3 are illustrated in FIG. 2.

**Table 6**

| Classification | Amount of binder (wt%) | Amount of plasticizer (%) | Plasticizer | Strain rate (%) |
|---|---|---|---|---|
| Example 4 | 3 | 3 | L-SBR (P/B=1) | 0.351 |
| Example 5 | 3 | 1.5 | L-SBR (P/B=0.5) | 0.308 |
| Comparative Example 6 | 3 | - | - | 0.201 |

Referring to Table 6, the solid electrolyte membranes of Examples 4 and 5 exhibited improved strain rates compared to the solid electrolyte membrane of Comparative Example 3. As illustrated in FIG. 2, it was confirmed that the solid electrolyte membranes of Examples 4 and 5 exhibited a flexibility improvement effect due to the increased strain rates when an increased amount of the plasticizer is used, compared to the solid electrolyte membrane of Comparative Example 3.

### Evaluation Example 4: Rate characteristics

The all-solid-state secondary batteries manufactured according to Examples 6 and 7 and Comparative Example 6 were placed in a chamber at 45 °C. Each all-solid-state secondary battery was charged at a constant current of 0.1 C rate until the voltage reached 4.25 V (vs. Li), and then cut-off at a current of 0.05 C rate while maintaining a constant voltage of 4.25 V. Each all-solid-state secondary battery was discharged once at a constant current of 0.1 C, 0.33 C, or 1.0 C until the voltage reached 2.5 V (vs. Li), discharge capacity according to C-rate thereof was measured, and the results thereof are shown in Table 7.

**Table 7**

| Classification | 2SE | Discharge capacity at 0.1 C (mAh/g) | Discharge capacity at 0.33 C (mAh/g) | Discharge capacity at 1.0 C (mAh/g) | Discharge capacity ratio (%) at 1.0 C/0.1 C |
|---|---|---|---|---|---|
| Comparative Example 6 | PA (Ref) | 204. 04 | 191.33 | 172.71 | 84.7 |
| Example 6 | PA+ L-SBR, (P/B=1) | 209.2 | 196.6 | 181.9 | 87 |

Referring to Table 7, the all-solid-state secondary battery of Example 6 uses the second solid electrolyte of Example 4, and has excellent flexibility compared to the all-solid-state secondary battery of Comparative Example 6, and when solid electrolyte membranes including low-molecular-weight rubber plasticizers were used, an excellent adhesive interface was formed even under low pressing conditions, resulting in improved battery characteristics, compared to the comparative example. As a result, it was confirmed that the all-solid-state secondary battery of Example 6 had further improved discharge capacity and resistance characteristics in terms of high-rate capabilities at 1 C, compared to the all-solid-state secondary battery of Comparative Example 6.

Similar to the all-solid-state secondary battery of Example 6, the all-solid-state secondary battery of Example 7 exhibited further improved discharge capacity and resistance characteristics in terms of high-rate capabilities at 1 C, compared to the all-solid-state secondary battery of Comparative Example 6.

### Evaluation Example 5: Battery operated or not

It was evaluated whether the all-solid-state secondary batteries of Example 6 and Comparative Example 6 operate when charged at 0.33 C.

Whether or not each battery operates was determined by the presence or absence of a micro-short circuit, through a charging and discharging method at a constant current, which will be described below.

The all-solid-state secondary batteries manufactured according to Example 6 and Comparative Example 6 were placed in a chamber at 45 °C. Each all-solid-state secondary battery was charged at a constant current of 0.33 C rate until the voltage reached 4.25 V (vs. Li), and then cut-off at a current of 0.05 C rate while maintaining a constant voltage of 4.25 V.

Each all-solid-state secondary battery was discharged once at a constant current of 0.33 C until the voltage reached 2.5 V (vs. Li),

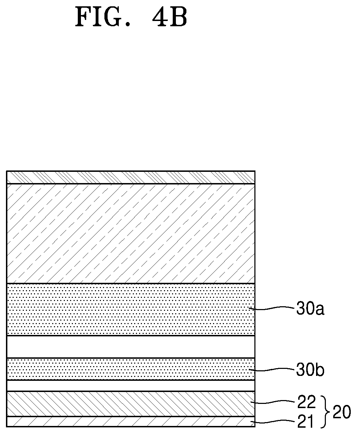

The results of the occurrence of a short circuit of each all-solid-state secondary battery when charged at 0.33 C are shown in Table 8 and FIG. 4.

**Table 8**

| Classification | Chargeable or not at 0.33 C |
|---|---|
| Example 6 | Chargeable |
| Comparative Example 6 | Occurrence of micro-short circuit (overcharging) |

As illustrated in Table 8 and FIG. 4, unlike the all-solid-state secondary battery of Comparative Example 6, the all-solid-state secondary battery of Example 6 is suitable for the formation of a bonding interface between electrode plates even at a low bonding pressure, and thus operated well even when charged at 0.33 C.

While embodiments have been described with reference to the drawings and examples, these are provided for illustrative purposes only, and it will be understood by those of ordinary skill in the art that various modifications and other equivalent embodiments can be made therefrom. Therefore, the scope of the present application should be defined by the appended claims.

A solid electrolyte membrane according to an embodiment has improved flexibility without reducing ionic conductivity. When the solid electrolyte membrane is used, pressing process conditions may be relaxed and microcracks and fractures may be suppressed, thus enabling the manufacture of an all-solid-state secondary battery with improved stability.

**It** should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. A composition for forming a solid electrolyte membrane, the composition comprising:
a solid electrolyte;
a high-molecular-weight polymer binder having a weight average molecular weight of greater than 75,000 gram/mole (g/mol) but less than or equal to 1,000,000 g/mol;
a low-molecular-weight non-polar liquid rubber, wherein liquid rubber refers to a rubber that is liquid at 25 °C; and
a solvent;
wherein the low-molecular-weight non-polar liquid rubber has a weight average molecular weight of 2,000 g/mol to 75,000 g/mol, and a viscosity of 0.001 to 100 Pa·s (1 centipoises (cps) to 100,000 cps);
wherein the weight average molecular weight is determined by gel permeation chromatography (GPC) using a polystyrene standard, and the viscosity is measured using a rotational viscometer under measuring conditions of 25°C, spindle 64, and 20 rpm.

2. The composition of claim 1, wherein the low-molecular-weight non-polar liquid rubber has a glass transition temperature of -95 °C to -6 °C, determined by differential scanning calorimetry (DSC) as per ASTM D3418 with a 20°C/min heating rate; and/or
wherein the low-molecular-weight non-polar liquid rubber has a weight average molecular weight of 5,000 g/mol to 45,000 g/mol.

3. The composition of any of 1 or 2, wherein the low-molecular-weight non-polar liquid rubber is a homopolymer containing a unit structure derived from a conjugated diene monomer; or
wherein the low-molecular-weight non-polar liquid rubber is a copolymer containing unit structures derived from a conjugated diene first monomer and an aromatic vinyl second monomer; or
wherein the low-molecular-weight non-polar liquid rubber is a terpolymer containing unit structures derived from a conjugated diene first monomer, an aromatic vinyl second monomer, and a conjugated polyene third monomer.

4. The composition of any of claims 1-3, wherein the low-molecular-weight non-polar liquid rubber comprises a liquid butadiene rubber, a liquid isoprene rubber, a liquid styrene butadiene rubber, a liquid natural rubber, a liquid acrylonitrile-butadiene rubber, a liquid isobutylene-isoprene rubber, a liquid isoprene propylene rubber, a liquid styrene-butadiene-farnesene copolymer, a copolymer in which a farnesene block is formed at an end of a styrene-butadiene random copolymer, a copolymer in which a butadiene block is formed at an end of a styrene-farnesene random copolymer, or a combination thereof.

5. The composition of any of claims 1-4, wherein the high-molecular-weight polymer binder has a weight average molecular weight of 100,000 g/mol to 1,000,000 g/mol, and
the high-molecular-weight polymer binder comprises a polyacrylate, a polyvinyl alcohol, a carboxymethyl cellulose, a hydroxypropyl cellulose, a diacetylcellulose, a polyvinyl chloride, a carboxylated polyvinyl chloride, a polyvinyl fluoride, a polymer comprising ethylene oxide, a polyvinylpyrrolidone, a polyurethane, a polytetrafluoroethylene, a polyvinylidene fluoride, a polyethylene, a polypropylene, a styrene-butadiene rubber, a hydrogenated nitrile-butadiene rubber, a (meth)acrylated styrene-butadiene rubber, an epoxy resin, a (meth)acrylic resin, a polyester, a nylon, a copolymer comprising unit structures derived from a non-polar monomer and at least one polar monomer selected from a nitrile-based monomer and a (meth)acrylic monomer, an ethylene vinyl acetate copolymer, or a combination thereof.

6. The composition of any of claims 1-5, wherein the solid electrolyte comprises a sulfide solid electrolyte, an oxide solid electrolyte, a polymer solid electrolyte, a gel electrolyte, or a combination thereof,
wherein the gel electrolyte comprises a polymer gel electrolyte;
wherein the solid electrolyte has a crystalline structure;
preferably wherein the solid electrolyte comprises the sulfide solid electrolyte, and the sulfide solid electrolyte is an argyrodite-type compound.

7. A method of manufacturing a solid electrolyte membrane, the method comprising:
preparing the composition of any of claims 1-6; and
coating a substrate with the composition to form a coated substrate; and drying the coated substrate to manufacture the solid electrolyte membrane on the substrate.

8. A solid electrolyte membrane obtainable by the method of claim 7.

9. The solid electrolyte membrane of claim 8, wherein an amount of the low-molecular-weight non-polar liquid rubber is 5 wt% or less with respect to a total weight of the solid electrolyte membrane; and/or
wherein the solid electrolyte membrane has a strain rate of 0.095 % or more, and the solid electrolyte membrane has a Young's modulus of 10 GPa to 20 GPa;
wherein the strain rate and Young's modulus are determined according to the method of Evaluation Example 2.

10. An all-solid-state secondary battery comprising a cathode, an anode current collector, and a solid electrolyte layer disposed between the cathode and the anode current collector,
wherein the solid electrolyte layer comprises the solid electrolyte membrane of any claims 8 or 9.

11. The all-solid-state secondary battery of claim 10, wherein the cathode comprises a cathode current collector,
wherein at least one of the cathode current collector or the anode current collector comprises a base film and a metal layer disposed on one or both sides of the base film,
wherein the base film comprises a polymer, and the polymer comprises a polyethylene terephthalate, a polyethylene, a polypropylene, a polybutylene terephthalate, a polyimide, or a combination thereof, and
the metal layer comprises indium, copper, magnesium, stainless steel, titanium, iron, cobalt, nickel, zinc, aluminum, germanium, lithium, or an alloy thereof.

12. The all-solid-state secondary battery of claims 10 or 11, wherein a first anode active material layer is disposed between the anode current collector and the solid electrolyte layer,
wherein the first anode active material layer comprises an anode active material and a binder;
preferably wherein the anode active material comprises at least one of a carbon anode active material or a metal or metalloid anode active material,
wherein the carbon anode active material comprises an amorphous carbon, a crystalline carbon, a porous carbon, or a combination thereof.

13. The all-solid-state secondary battery of claim 12, further comprising, after the all-solid-state secondary battery is charged, a second anode active material layer disposed between the anode current collector and the first anode active material layer,
wherein the second anode active material layer is a metal layer, and the metal layer comprises lithium or a lithium alloy.

14. An all-solid-state secondary battery comprising a cathode, an anode current collector, and a solid electrolyte layer disposed between the anode current collector and the cathode,
wherein the solid electrolyte layer comprises a first solid electrolyte layer and a second solid electrolyte layer, wherein the first solid electrolyte layer is in contact with the cathode,
the second solid electrolyte layer is in contact with an anode, and
at least one of the first solid electrolyte layer or the second solid electrolyte layer comprises the solid electrolyte membrane of claims 8 or 9;
preferably wherein the second solid electrolyte layer is the solid electrolyte membrane.

## Patentansprüche

1. Zusammensetzung zum Bilden einer Festelektrolytmembran, wobei die Zusammensetzung Folgendes umfasst:
einen Festelektrolyten;
ein Polymerbindemittel mit hohem Molekulargewicht mit einem gewichtsmittleren Molekulargewicht von mehr als 75.000 Gramm/Mol (g/Mol), aber weniger als oder gleich 1.000.000 g/Mol;
einen nicht-polaren Flüssigkautschuk mit niedrigem Molekulargewicht, wobei sich Flüssigkautschuk auf einen Kautschuk bezieht, der bei 25 °C flüssig ist; und
ein Lösungsmittel;
wobei der nicht-polare Flüssigkautschuk mit niedrigem Molekulargewicht ein gewichtsmittleres Molekulargewicht von 2.000 g/Mol bis 75.000 g/Mol und eine Viskosität von 0,001 bis 100 Pa·s (1 Centipoise (cps) bis 100.000 cps) aufweist;
wobei das gewichtsmittlere Molekulargewicht durch Gelpermeationschromatographie (GPC) unter Verwendung eines Polystyrolstandards bestimmt wird und die Viskosität unter Verwendung eines Rotationsviskosimeters unter Messbedingungen von 25 °C, Spindel 64 und 20 U/min gemessen wird.

2. Zusammensetzung nach Anspruch 1, wobei der nicht-polare Flüssigkautschuk mit niedrigem Molekulargewicht eine Glasübergangstemperatur von -95 °C bis -6 °C aufweist, bestimmt durch Differentialscanningkalorimetrie (DSC) laut ASTM D3418 mit einer Heizrate von 20 °C/min; und/oder
wobei der nicht-polare Flüssigkautschuk mit niedrigem Molekulargewicht ein gewichtsmittleres Molekulargewicht von 5.000 g/Mol bis 45.000 g/Mol aufweist.

3. Zusammensetzung nach einem von 1 oder 2, wobei der nicht-polare Flüssigkautschuk mit niedrigem Molekulargewicht ein Homopolymer ist, das eine Einheitsstruktur enthält, die von einem konjugierten Dienmonomer abgeleitet ist; oder
wobei der nicht-polare Flüssigkautschuk mit niedrigem Molekulargewicht ein Copolymer ist, das Einheitsstrukturen enthält, die von einem ersten Monomer von konjugiertem Dien und einem zweiten Monomer von aromatischem Vinyl abgeleitet sind; oder
wobei der nicht-polare Flüssigkautschuk mit niedrigem Molekulargewicht ein Terpolymer ist, das Einheitsstrukturen enthält, die von einem ersten Monomer von konjugiertem Dien, einem zweiten Monomer von aromatischem Vinyl und einem dritten Monomer von konjugiertem Polyen abgeleitet sind.

4. Zusammensetzung nach einem der Ansprüche 1-3, wobei der nicht-polare Flüssigkautschuk mit niedrigem Molekulargewicht einen flüssigen Butadienkautschuk, einen flüssigen Isoprenkautschuk, einen flüssigen Styrol-Butadien-Kautschuk, einen flüssigen Naturkautschuk, einen flüssigen Acrylnitril-Butadien-Kautschuk, einen flüssigen Isobutylen-Isopren-Kautschuk, einen flüssigen Isopren-Propylen-Kautschuk, ein flüssiges Styrol-Butadien-Farnesen-Copolymer, ein Copolymer, in dem ein Farnesenblock an einem Ende eines zufälligen Styrol-Butadien-Copolymers gebildet ist, ein Copolymer, in dem ein Butadienblock an einem Ende eines zufälligen Styrol-Farnesen-Copolymers gebildet ist, oder eine Kombination davon umfasst.

5. Zusammensetzung nach einem der Ansprüche 1-4, wobei das Polymerbindemittel mit hohem Molekulargewicht ein gewichtsmittleres Molekulargewicht von 100.000 g/Mol bis 1.000.000 g/Mol aufweist, und
das Polymerbindemittel mit hohem Molekulargewicht ein Polyacrylat, einen Polyvinylalkohol, eine Carboxymethylcellulose, eine Hydroxypropylcellulose, eine Diacetylcellulose, ein Polyvinylchlorid, ein carboxyliertes Polyvinylchlorid, ein Polyvinylfluorid, ein Polymer, das Ethylenoxid umfasst, ein Polyvinylpyrrolidon, ein Polyurethan, ein Polytetrafluorethylen, ein Polyvinylidenfluorid, ein Polyethylen, ein Polypropylen, einen Styrol-Butadien-Kautschuk, einen hydrierten Nitril-Butadien-Kautschuk, einen (meth)acrylierten Styrol-Butadien-Kautschuk, ein Epoxidharz, ein (Meth)acrylharz, ein Polyester, ein Nylon, ein Copolymer, das Einheitsstrukturen umfasst, die von einem nicht-polaren Monomer und zumindest einem polaren Monomer ausgewählt aus einem Monomer auf Nitrilbasis und einem (Meth)acrylmonomer abgeleitet sind, ein Ethylen-Vinylacetat-Copolymer oder eine Kombination davon umfasst.

6. Zusammensetzung nach einem der Ansprüche 1-5, wobei der Festelektrolyt einen Sulfidfestelektrolyten, einen Oxidfestelektrolyten, einen Polymerfestelektrolyten, einen Gelelektrolyten oder eine Kombination davon umfasst,
wobei der Gelelektrolyt einen Polymergelelektrolyten umfasst;
wobei der Festelektrolyt eine kristalline Struktur aufweist;
wobei bevorzugt der Festelektrolyt den Sulfidfestelektrolyten umfasst und der Sulfidfestelektrolyt eine Verbindung vom Argyrodit-Typ ist.

7. Verfahren zum Herstellen einer Festelektrolytmembran, wobei das Verfahren Folgendes umfasst:
Zubereiten der Zusammensetzung nach einem der Ansprüche 1-6; und
Beschichten eines Substrats mit der Zusammensetzung, um ein beschichtetes Substrat zu bilden; und Trocknen des beschichteten Substrats, um die Festelektrolytmembran auf dem Substrat herzustellen.

8. Festelektrolytmembran, die durch das Verfahren nach Anspruch 7 erhaltbar ist.

9. Festelektrolytmembran nach Anspruch 8, wobei eine Menge des nicht-polaren Flüssigkautschuks mit niedrigem Molekulargewicht 5 Gew.-% oder weniger in Bezug auf ein Gesamtgewicht der Festelektrolytmembran ist; und/oder
wobei die Festelektrolytmembran eine Dehnungsrate von 0,095 % oder mehr aufweist und die Festelektrolytmembran ein Elastizitätsmodul von 10 GPa bis 20 GPa aufweist;
wobei die Dehnungsrate und das Elastizitätsmodul gemäß dem Verfahren von Evaluierungsbeispiel 2 bestimmt werden.

10. Vollfestkörpersekundärbatterie, umfassend eine Kathode, einen Anodenstromkollektor und eine Festelektrolytschicht, die zwischen der Kathode und dem Anodenstromkollektor angeordnet ist,
wobei die Festelektrolytschicht die Festelektrolytmembran nach einem der Ansprüche 8 oder 9 umfasst.

11. Vollfestkörpersekundärbatterie nach Anspruch 10, wobei die Kathode einen Kathodenstromkollektor umfasst,
wobei zumindest eines von dem Kathodenstromkollektor oder dem Anodenstromkollektor einen Basisfilm und eine Metallschicht umfasst, die auf einer oder beiden Seiten des Basisfilms angeordnet ist,
wobei der Basisfilm ein Polymer umfasst und das Polymer ein Polyethylenterephthalat, ein Polyethylen, ein Polypropylen, ein Polybutylenterephthalat, ein Polyimid oder eine Kombination davon umfasst, und
die Metallschicht Indium, Kupfer, Magnesium, Edelstahl, Titan, Eisen, Kobalt, Nickel, Zink, Aluminium, Germanium, Lithium oder eine Legierung davon umfasst.

12. Vollfestkörpersekundärbatterie nach Anspruch 10 oder 11, wobei eine erste Anodenaktivmaterialschicht zwischen dem Anodenstromkollektor und der Festelektrolytschicht angeordnet ist,
wobei die erste Anodenaktivmaterialschicht ein Anodenaktivmaterial und ein Bindemittel umfasst;
wobei bevorzugt das Anodenaktivmaterial zumindest eines von einem Kohlenstoffanodenaktivmaterial oder einem Metall- oder Halbmetallanodenaktivmaterial umfasst,
wobei das Kohlenstoffanodenaktivmaterial einen amorphen Kohlenstoff, einen kristallinen Kohlenstoff, einen porösen Kohlenstoff oder eine Kombination davon umfasst.

13. Vollfestkörpersekundärbatterie nach Anspruch 12, ferner umfassend, nachdem die Vollfestkörpersekundärbatterie geladen ist, eine zweite Anodenaktivmaterialschicht, die zwischen dem Anodenstromkollektor und der ersten Anodenaktivmaterialschicht angeordnet ist,
wobei die zweite Anodenaktivmaterialschicht eine Metallschicht ist und die Metallschicht Lithium oder eine Lithiumlegierung umfasst.

14. Vollfestkörpersekundärbatterie, umfassend eine Kathode, einen Anodenstromkollektor und eine Festelektrolytschicht, die zwischen dem Anodenstromkollektor und der Kathode angeordnet ist,
wobei die Festelektrolytschicht eine erste Festelektrolytschicht und eine zweite Festelektrolytschicht umfasst, wobei die erste Festelektrolytschicht in Kontakt mit der Kathode ist,
die zweite Festelektrolytschicht in Kontakt mit einer Anode ist, und
zumindest eines von der ersten Festelektrolytschicht oder der zweiten Festelektrolytschicht die Festelektrolytmembran nach Anspruch 8 oder 9 umfasst;
wobei bevorzugt die zweite Festelektrolytschicht die Festelektrolytmembran ist.

## Revendications

1. Composition destinée à la formation d'une membrane électrolytique solide, la composition comprenant :
un électrolyte solide ;
un liant polymère de poids moléculaire élevé présentant un poids moléculaire moyen en poids supérieur à 75 000 grammes/mole (g/mol) mais inférieur ou égal à 1 000 000 g/mol ;
un caoutchouc liquide non polaire de faible poids moléculaire, ledit caoutchouc liquide faisant référence à un caoutchouc liquide à 25°C ; et
un solvant ;
ledit caoutchouc liquide non polaire de faible poids moléculaire possédant un poids moléculaire moyen en poids de 2 000 g/mol à 75 000 g/mol et une viscosité de 0,001 à 100 Pa·s (1 centipoises (cps) à 100 000 cps) ;
ledit poids moléculaire moyen en poids étant déterminé par chromatographie par perméation de gel (GPC) à l'aide d'un étalon de polystyrène, et ladite viscosité étant mesurée à l'aide d'un viscosimètre rotatif dans des conditions de mesure de 25°C, tige 64 et 20 tr/min.

2. Composition de la revendication 1, ledit caoutchouc liquide non polaire de faible poids moléculaire possédant une température de transition vitreuse de -95°C à -6°C, déterminée par calorimétrie à balayage différentiel (DSC) selon la norme ASTM D3418 avec une vitesse de chauffage de 20°C/min ; et/ou
ledit caoutchouc liquide non polaire de faible poids moléculaire possédant un poids moléculaire moyen en poids de 5 000 g/mol à 45 000 g/mol.

3. Composition de l'un quelconque de 1 ou 2, ledit caoutchouc liquide non polaire de faible poids moléculaire étant un homopolymère contenant une structure unitaire dérivée d'un monomère de diène conjugué ; ou
ledit caoutchouc liquide non polaire de faible poids moléculaire étant un copolymère contenant des structures unitaires dérivées d'un premier monomère de diène conjugué et d'un second monomère de vinyle aromatique ; ou
ledit caoutchouc liquide non polaire de faible poids moléculaire étant un terpolymère contenant des structures unitaires dérivées d'un premier monomère de diène conjugué, d'un second monomère de vinyle aromatique et d'un troisième monomère de polyène conjugué.

4. Composition de l'une quelconque des revendications 1-3, ledit caoutchouc liquide non polaire de faible poids moléculaire comprenant un caoutchouc de butadiène liquide, un caoutchouc d'isoprène liquide, un caoutchouc de styrène-butadiène liquide, un caoutchouc naturel liquide, un caoutchouc d'acrylonitrile-butadiène liquide, un caoutchouc d'isobutylène-isoprène liquide, un caoutchouc d'isoprène-propylène liquide, un copolymère de styrène-butadiène-farnésène liquide, un copolymère dans lequel une séquence de farnésène est formée à une extrémité d'un copolymère statistique de styrène-butadiène, un copolymère dans lequel une séquence de butadiène est formée à une extrémité d'un copolymère statistique de styrène-farnésène, ou une combinaison de ceux-ci.

5. Composition de l'une quelconque des revendications 1-4, ledit liant polymère de poids moléculaire élevé possédant un poids moléculaire moyen en poids de 100 000 g/mol à 1 000 000 g/mol, et
ledit liant polymère de poids moléculaire élevé comprenant un polyacrylate, un alcool polyvinylique, une carboxyméthylcellulose, une hydroxypropylcellulose, une diacétylcellulose, un poly(chlorure de vinyle), un poly(chlorure de vinyle) carboxylé, un poly(fluorure de vinyle), un polymère comprenant de l'oxyde d'éthylène, une polyvinylpyrrolidone, un polyuréthane, un polytétrafluoroéthylène, un poly(fluorure de vinylidène), un polyéthylène, un polypropylène, un caoutchouc styrène-butadiène, un caoutchouc nitrile-butadiène hydrogéné, un caoutchouc styrène-butadiène (méth)acrylé, une résine époxy, une résine (méth)acrylique, un polyester, un nylon, un copolymère comprenant des structures unitaires dérivées d'un monomère non polaire et d'au moins un monomère polaire choisi parmi un monomère à base de nitrile et un monomère (méth)acrylique, un copolymère éthylène-acétate de vinyle, ou une combinaison de ceux-ci.

6. Composition de l'une quelconque des revendications 1-5, ledit électrolyte solide comprenant un électrolyte solide de sulfure, un électrolyte solide d'oxyde, un électrolyte solide polymère, un électrolyte en gel, ou une combinaison de ceux-ci,
ledit électrolyte en gel comprenant un électrolyte en gel polymère ;
ledit électrolyte solide présentant une structure cristalline ;
ledit électrolyte solide comprenant de préférence l'électrolyte solide de sulfure, et l'électrolyte solide de sulfure étant un composé de type argyrodite.

7. Procédé de fabrication d'une membrane électrolytique solide, le procédé comprenant :
la préparation de la composition de l'une quelconque des revendications 1-6 ; et
le revêtement d'un substrat avec la composition pour former un substrat revêtu ; et le séchage du substrat revêtu pour fabriquer la membrane électrolytique solide sur le substrat.

8. Membrane électrolytique solide pouvant être obtenue par le procédé de la revendication 7.

9. Membrane électrolytique solide de la revendication 8, une quantité
du caoutchouc liquide non polaire de faible poids moléculaire étant inférieure ou égale à 5 % en poids par rapport à un poids total de la membrane électrolytique solide ; et/ou
ladite membrane électrolytique solide possédant un taux de déformation supérieur ou égal à 0,095 %, et ladite membrane d'électrolyte solide possédant un module de Young de 10 GPa à 20 GPa ;
ladite vitesse de déformation et ledit module de Young étant déterminés selon le procédé de l'exemple d'évaluation 2.

10. Batterie secondaire entièrement solide comprenant une cathode, un collecteur de courant d'anode et une couche d'électrolyte solide disposée entre la cathode et le collecteur de courant d'anode,
ladite couche d'électrolyte solide comprenant la membrane électrolytique solide de l'une quelconque des revendications 8 ou 9.

11. Batterie secondaire entièrement solide de la revendication 10, ladite cathode comprenant un collecteur de courant de cathode,
au moins l'un du collecteur de courant de cathode ou du collecteur de courant d'anode comprenant un film de base et une couche de métal disposée sur l'un ou sur les deux côtés du film de base,
ledit film de base comprenant un polymère, et le polymère comprenant un poly (téréphtalate d'éthylène), un polyéthylène, un polypropylène, un poly(téréphtalate de butylène), un polyimide ou une combinaison de ceux-ci, et
ladite couche de métal comprenant de l'indium, du cuivre, du magnésium, de l'acier inoxydable, du titane, du fer, du cobalt, du nickel, du zinc, de l'aluminium, du germanium, du lithium, ou un alliage de ceux-ci.

12. Batterie secondaire entièrement solide de la revendication 10 ou 11, une première couche de matériau actif d'anode étant disposée entre le collecteur de courant d'anode et la couche d'électrolyte solide,
ladite première couche de matériau actif d'anode comprenant un matériau actif d'anode et un liant ;
ledit matériau actif d'anode comprenant de préférence au moins l'un d'un matériau actif d'anode en carbone ou un matériau actif d'anode en métal ou en métalloïde,
ledit matériau actif d'anode en carbone comprenant un carbone amorphe, un carbone cristallin, un carbone poreux ou une combinaison de ceux-ci.

13. Batterie secondaire entièrement solide de la revendication 12, comprenant en outre, après la charge de la batterie secondaire entièrement solide, une seconde couche de matériau actif d'anode disposée entre le collecteur de courant d'anode et la première couche de matériau actif d'anode,
ladite seconde couche de matériau actif d'anode étant une couche de métal, et ladite couche de métal comprenant du lithium ou un alliage de lithium.

14. Batterie secondaire entièrement solide comprenant une cathode, un collecteur de courant d'anode et une couche d'électrolyte solide disposée entre le collecteur de courant d'anode et la cathode,
ladite couche d'électrolyte solide comprenant une première couche d'électrolyte solide et une seconde couche d'électrolyte solide, ladite première couche d'électrolyte solide étant en contact avec la cathode,
ladite seconde couche d'électrolyte solide étant en contact avec une anode, et
au moins l'une de la première couche d'électrolyte solide ou de la seconde couche d'électrolyte solide comprenant la membrane électrolytique solide des revendications 8 ou 9 ;
ladite seconde couche d'électrolyte solide étant de préférence la membrane électrolytique solide.
